# EUROPEAN PATENT SPECIFICATION

(11) **EP 1 751 223 B1**
(45) Date of publication and mention of the grant of the patent: **12.08.2009**
(21) Application number: 05739782.0
(22) Date of filing: 11.05.2005
(51) Int. Cl.: C08K 5/00, C08K 5/5353, C08K 5/521, C08K 5/523, C08K 5/3492, C08K 5/5333, C08K 5/5357, C08K 5/5317, C08K 5/52

(54) **FLAME RETARDANTS**
FLAMMSCHUTZMITTEL
IGNIFUGEANTS

(30) Priority: 13.05.2004 EP 04102078
(43) Date of publication of application: 14.02.2007
(73) Proprietor: BASF SE, 67056 Ludwigshafen (DE)
(72) Inventor: ROTH, Michael, 64686 Lautertal (DE); SIMON, Dirk, 79541 Lörrach-Brombach (DE)
(74) Representative: Zumstein, Angela
(86) International application number: PCT/EP2005/052126
(87) International publication number: WO 2005/113661

(56) References cited:
- EP-A- 0 006 568
- EP-A- 0 484 832
- EP-A- 0 545 496
- EP-A- 0 617 079
- EP-A- 0 707 036
- WO-A-01/98401
- GB-A- 1 468 188

## Description

The invention relates to a novel flame retardant combination and to the use thereof in synthetic, especially thermoplastic, polymers.

Metal salts of phosphonic acids, on their own or in combination with other components, are known as flame retardants for a large number of thermoplastic polymers, for example from GB-A-2 211 850, EP-A-245 207, EP-A-343 109 and DE-A-3 833 977, wherein special emphasis is to be given to the salts of the methyl ester of methyl phosphonic acid.

Nitrogen-containing flame retardants, especially those based on melamine, have been known for a long time and are, in some cases, commercially available. Some of those melamine derivatives also contain phosphorus. Examples of publications relating to such flame retardants are, *inter alia,* EP-A-782 599, EP-A-1 095 030, US-A-4,010,137 and US-A-3,915,777.

Combinations of nitrogen-containing flame retardants with flame retardants based on phosphorus compounds are also known. In that respect see, for example, DE-A-197 34 437, DE-A-197 37 727, WO-A-97/39053, EP-A-1 070 754, EP-A-6568 and DE-A-196 14 424. Particular phosphates or phosphonates in combination with nitrogen-containing compounds are also known as flame retardants, for example from EP-A-484 832, EP-A-545 496, EP-A-707 036, WO-A-01/98401, GB-A-1 468 188 and EP-A-617 079.

There is a continuing need for flame retardants that have improved properties and that can be used in various plastics. In particular, increased safety and environmental requirements mean that hitherto known flame retardants are no longer capable of satisfying all demands.

It has now been found that the combined use of nitrogen-containing flame retardants, especially those based on melamine, with very particular organic phosphonates delivers outstanding action in a number of polymers.

The invention accordingly relates to a flame retardant comprising
A. at least one organic phosphonate of formula I 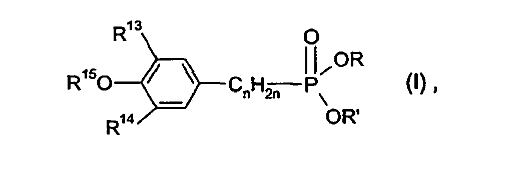 wherein R is hydrogen, C₁-C₂₀alkyl, unsubstituted or C₁-C₄alkyl-substituted phenyl or naphthyl, R' is hydrogen, C₁-C₂₀alkyl, unsubstituted or C₁-C₄alkyl-substituted phenyl or naphthyl or M₁^{r+}/r, n is an integer from 0 to 6, M₁^{r+} is an r-valent metal ion or the ammonium ion, r is an integer from 1 to 4,
   R¹³ is isopropyl, isobutyl, tert-butyl, cyclohexyl or is cycloalkyl substituted by from 1 to 3 C₁-C₄alkyl groups,
   R¹⁴ is hydrogen, C₁-C₄alkyl , cycloalkyl or is cyclohexyl substituted by from 1 to 3 C₁-C₄alkyl groups, and
   R¹⁵ is hydrogen, C₁-C₁₈alkyl, trimethylsilyl, benzyl, phenyl or sulfonyl; and
B. at least one flame retardant component based on a nitrogen compound.

Component B is, for example a nitrogen compound of formulae III to VIIIa or a mixture of compounds represented by those formulae, 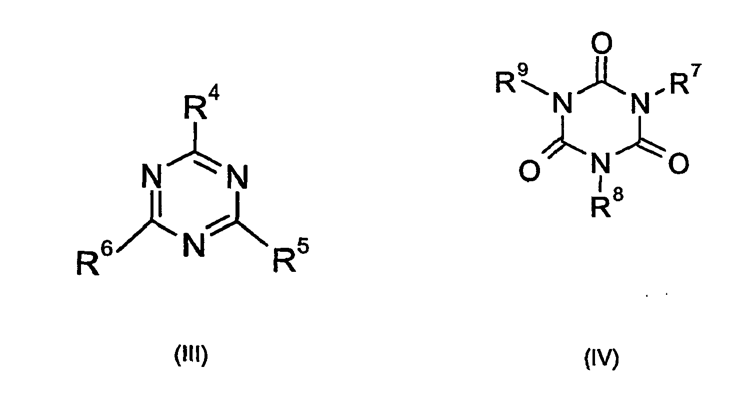 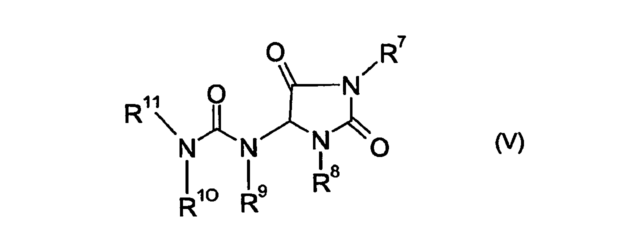 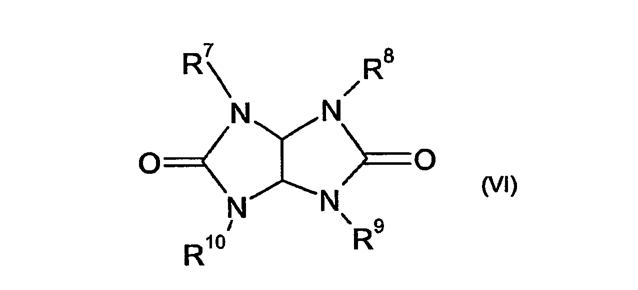 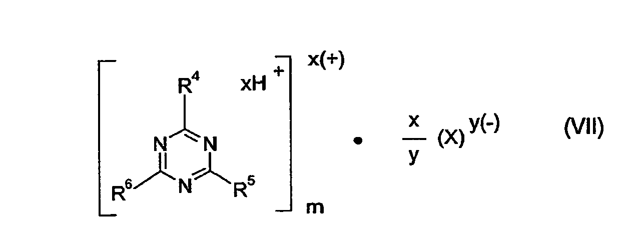 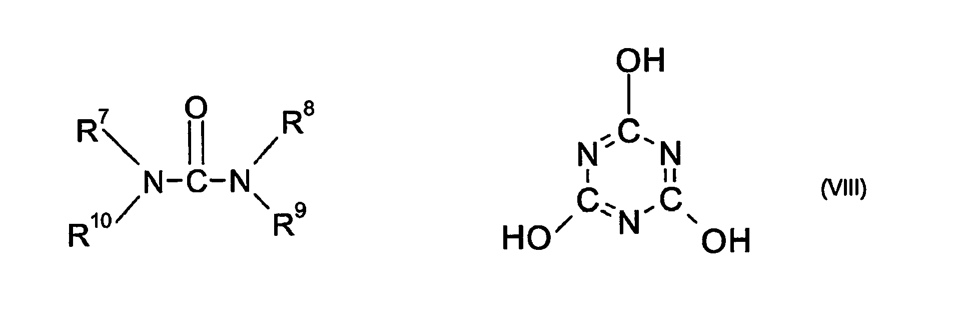 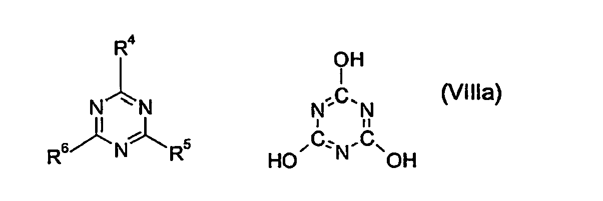 wherein
R⁴ to R⁶ are each independently of the others hydrogen, C₁-C₈alkyl, C₅-C₆cycloalkyl or C₁-C₄alkyl-C₅-C₆cycloalkyl, each unsubstituted or substituted by a hydroxy or C₁-C₄-hydroxyalkyl group, C₂-C₈alkenyl; C₁-C₈-alkoxy, -acyl, -acyloxy, C₆-C₁₂aryl, -O-R² or -N(R²)R³, and R² and R³ are hydrogen, C₁-C₄alkyl, C₅-C₆cycloalkyl, C₂-C₈alkenyl, C₁-C₄hydroxyalkyl or C₆-C₁₂aryl, with the proviso that R⁴ to R⁶ are not simultaneously hydrogen and also, in formula III, not simultaneously -NH₂, and in formula VII at least one group is present which is capable of adding a proton,
R⁷ to R¹¹ each independently of the others have the same possible meanings as R⁴ to R⁶ with the exception of -N(R²)R³, X is the anion of a protonic acid, x is the number of protons transferred from the latter to the triazine compound and y is the number of protons abstracted from the protonic acid; or ammonium polyphosphate, a melamine ammonium phosphate, a melamine ammonium polyphosphate, melamine ammonium pyrophosphate, a condensation product of melamine
or/and a reaction product of melamine with phosphoric acid or/and a reaction product of a condensation product of melamine with phosphoric acid or a mixture thereof.

In formula I, alkyl groups as R and R' have, for example, from 1 to 18, especially from 1 to 12, preferably from 1 to 8 or from 2 to 8, more especially from 2 to 4, carbon atoms. Individual examples thereof are methyl, ethyl, propyl, butyl, pentyl, hexyl, octyl, dodecyl and stearyl, including the straight-chain and branched isomers.

When phenyl or naphthyl are substituted, they contain preferably from 1 to 3, especially 1 or 2, C₁-C₄alkyl groups. Examples of such substituted aromatic radicals are o-, m- or p-methylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, 2-methyl-6-ethylphenyl, 4-tert-butylphenyl, 2-ethylphenyl, 2,6-diethylphenyl, 1-methylnaphthyl, 2-methylnaphthyl, 4-methylnaphthyl and 4-tert-butylnaphthyl.

Cycloalkyl substituted by from 1 to 3 C₁-C₄alkyl groups carries preferably 1 or 2 such alkyl groups, which may be straight-chained or branched. Examples thereof are methylcyclohexyl, dimethylcyclohexyl, trimethylcyclohexyl and tert-butylcyclohexyl.

In formula I, n is, for example, a number from 1 to 6, preferably from 1 to 4, especially 1 or 2, more especially 1. r is preferably from 1 to 3, especially 1 or 2.

The substituents R and R' are preferably other than hydrogen.

In compounds of formula I, R is preferably C₁-C₈alkyl, for example from C₂- to C₈-alkyl, especially C₂-C₄alkyl. Special preference is given to ethyl.

Advantageous compounds of formula I contain, as the substituent R', C₁-C₈alkyl (especially C₂-C₈alkyl, more especially C₂-C₄alkyl, preferably ethyl) or a cation from the series Na⁺, K⁺, Mg⁺⁺/2, Ca⁺⁺/2, Ba⁺⁺/2, Zn⁺⁺/2, B⁺⁺⁺/3, Al⁺⁺⁺/3, Cu⁺⁺/2, Fe⁺⁺⁺/3, Sn⁴⁺/4 or Sb⁴⁺/4, for example Na⁺, K⁺, Mg⁺⁺/2, Ca⁺⁺/2, Ba⁺⁺/2, Zn⁺⁺/2 or Al⁺⁺⁺/3, special preference being given to Ca⁺⁺/2.

R' is especially C₂-C₄alkyl or Na⁺, K⁺, Mg⁺⁺/2, Ca⁺⁺/2, Ba⁺⁺/2, Zn⁺⁺/2 or Al⁺⁺⁺/3, more especially ethyl or Ca⁺⁺/2.

R¹³ is especially tert-butyl, R¹⁴ is hydrogen or C₁-C₄alkyl and R¹⁵ is hydrogen. R¹⁴ is also preferably tert-butyl.

The compounds of formula I are either known, commercially available in some cases, or/and can be prepared by methods known *per se.* In that respect see, for example, US-A-3,367,870, US A-3,281,505, US-A-3,280,070 and US-A-4,778,840.

The symbol X in formula VII denotes, for example, an anion of phosphoric acid, polyphosphoric acid (linear or branched), pyrophosphoric acid, phosphinic acid, phosphonic acid or boric acid.

R⁴ to R⁶ are, for example, each independently of the others, hydrogen, C₁-C₄alkyl, cyclopentyl, cyclohexyl, methylcyclohexyl, C₁-C₄hydroxyalkyl, C₂-C₆alkenyl, C₁-C₄alkoxy, phenyl which is unsubstituted or substituted by from 1 to 3 methyl or methoxy groups or/and by halogen atoms, -OR² or -NR²R³, wherein R² and R³ are each independently of the other hydrogen, C₁-C₄alkyl, C₁-C₄hydroxyalkyl, cycloalkyl, methylcyclohexyl or phenyl which is unsubstituted or substituted by from 1 to 3 methyl or methoxy groups or/and by halogen atoms. In formula III, preference is given to at least one of R² and R³ being other than hydrogen.

For R⁷ to R¹¹ the same preferences as for R⁴ to R⁶ also apply by analogy.

As component B there are advantageously used compounds of formulae IV, V, VI, VII, VIII and VIIIa and also the melamine compounds specifically mentioned, especially the compounds of formulae VII, VIIIa and also the melamine compounds specifically mentioned.

Preferred nitrogen compounds (component B) are, for example, benzoguanamine (formula III, R⁴ = phenyl, R⁵ = R⁶ = -NH₂), tris(hydroxyethyl) isocyanurate (formula IV, R⁷= R⁸ = R⁹ = -CH₂-CH₂-OH), allantoin (formula V, R⁷ = R⁸ = R⁹ = R¹⁰ = R¹¹ = H), glycoluril (formula VI, R⁷ = R⁸ = R⁹ = R¹⁰ = H) and also melamine phosphate, dimelamine phosphate and melamine pyrophosphate, melamine polyphosphate, melamine borate (all of formula VII type), urea cyanurate (formula VIII type), melamine cyanurate (formula VIIIa type), and also melam or melem phosphate, melam or melem polyphosphate, ammonium polyphosphate, melamine ammonium phosphate, pyrophosphate or polyphosphate.

The compounds used as component B are known or can be obtained by known customary methods. Some of them are commercially available.

Emphasis is to be given to flame retardants according to the invention wherein component B is at least one compound of formulae VII or/and VIIIa or/and ammonium polyphosphate, a melamine ammonium polyphosphate, melamine ammonium pyrophosphate, a condensation product of melamine or/and a reaction product of melamine with phosphoric acid or/and a reaction product of a condensation product of melamine with phosphoric acid or/and mixtures thereof.

Advantageously, component B in the flame retardants is benzoguanamine, tris(hydroxyethyl) isocyanurate, allantoin, glycoluril, melamine cyanurate, melamine phosphate, dimelamine phosphate, melamine pyrophosphate, urea cyanurate, melamine polyphosphate, melamine borate, ammonium polyphosphate, melamine ammonium polyphosphate or melamine ammonium pyrophosphate, preferably a condensation product of melamine from the series melem, melam, melon and/or a higher condensed compound or a reaction product of melamine with phosphoric acid and/or a reaction product of condensation products of melamine with phosphoric acid or a mixture thereof.

Special emphasis is to be given to: dimelamine pyrophosphate, melamine polyphosphate, melem polyphosphate, melam polyphosphate, and/or a mixed polysalt of such a type, more especially melamine polyphosphate.

The ratio of components A and B may vary within wide limits and is dependent upon the intended use. Examples of ratios A:B (ratios by weight) are from 5:95 to 95:5, e.g. from 10:90 to 90:10, preferably from 20:80 to 80:20, especially from 30:70 to 70:30 and from 40:60 to 60:40.

Both component A and component B may comprise one or more compounds of formula I or of formulae III to VIIIa or the melamine compounds specifically mentioned, mixtures of compounds of different formulae being possible.

The flame retardants according to the invention are outstandingly suitable for imparting flame-retarding properties to synthetic polymers, especially thermoplastics.

Examples of such synthetic polymers are:
1. Polymers of mono- and di-olefins, for example polypropylene, polyisobutylene, polybutene-1, poly-4-methylpentene-1, polyvinylcyclohexane, polyisoprene or polybutadiene and also polymerisates of cyclo-olefins, for example of cyclopentene or norbornene; and also polyethylene (which may optionally be crosslinked), for example high density polyethylene (HDPE), high density polyethylene of high molecular weight (HDPE-HMW), high density polyethylene of ultra-high molecular weight (HDPE-UHMW), medium density polyethylene (MDPE), low density polyethylene (LDPE), and linear low density polyethylene (LLDPE), (VLDPE) and (ULDPE).
   Polyolefins, that is to say polymers of mono-olefins, as mentioned by way of example in the preceding paragraph, especially polyethylene and polypropylene, can be prepared by various processes, especially by the following methods:
   a) by free radical polymerisation (usually at high pressure and high temperature);
   b) by means of a catalyst, the catalyst usually containing one or more metals of group IVb, Vb, VIb or VIII. Those metals generally have one or more ligands, such as oxides, halides, alcoholates, esters, ethers, amines, alkyls, alkenyls and/or aryls, which may be either π- or σ-coordinated. Such metal complexes may be free or fixed to carriers, for example to activated magnesium chloride, titanium(III) chloride, aluminium oxide or silicon oxide. Such catalysts may be soluble or insoluble in the polymerisation medium. The catalysts can be active as such in the polymerisation or further activators may be used, for example metal alkyls, metal hydrides, metal alkyl halides, metal alkyl oxides or metal alkyl oxanes, the metals being elements of group(s) la, IIa and/or IIIa. The activators may have been modified, for example, with further ester, ether, amine or silyl ether groups. Such catalyst systems are usually referred to as Phillips, Standard Oil Indiana, Ziegler (-Natta), TNZ (DuPont), metallocene or Single Site Catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and di-olefins with one another or with other vinyl monomers, for example ethylene/propylene copolymers, linear low density polyethylene (LLDPE) and mixtures thereof with low density polyethylene (LDPE), propylene/butene-1 copolymers, propylene/isobutylene copolymers, ethylene/butene-1 copolymers, ethylene/hexene copolymers, ethylene/methylpentene copolymers, ethylene/heptene copolymers, ethylene/octene copolymers, ethylenelvinylcyclohexane copolymers, ethylene/cyclo-olefin copolymers, for example ethylene/norbornene (COC), ethylene/1-olefin copolymers wherein the 1-olefin is prepared *in situ,* propylene/butadiene copolymers, isobutylene/isoprene copolymers, ethylene/vinyl cyclohexene copolymers, ethylene/alkyl acrylate copolymers, ethylene/alkyl methacrylate copolymers, ethylene/vinyl acetate copolymers, ethylene/acrylic acid copolymers and salts thereof (ionomers), and also terpolymers of ethylene with propylene and a diene, such as hexadiene, dicyclopentadiene or ethylidenenorbornene; and also mixtures of such copolymers with one another or with polymers mentioned under 1), for example polypropylene-ethylene/propylene copolymers, LDPE-ethylene/vinyl acetate copolymers, LDPE-ethylene/acrylic acid copolymers, LLDPE-ethylene/vinyl acetate copolymers, LLDPE-ethylene/acrylic acid copolymers and alternately or randomly structured polyalkylene-carbon monoxide copolymers and mixtures thereof with other polymers, for example polyamides.
4. Polystyrene, poly(p-methylstyrene), poly(α-methylstyrene).
5. Aromatic homopolymers and copolymers derived from vinyl-aromatic monomers, for example styrene, α-methylstyrene, all isomers of vinyltoluene, for example p-vinyltoluene, all isomers of ethylstyrene, propylstyrene, vinylbiphenyl, vinylnaphthalene, vinylanthracene and mixtures thereof; homopolymers and copolymers can have a syndiotactic, isotactic, hemi-isotactic or atactic stereo structure; preference is given to atactic polymers. Also included are stereoblock polymers.
6a. Copolymers including the already mentioned vinyl-aromatic monomers and comonomers selected from ethylene, propylene, dienes, nitriles, acids, maleic anhydrides, maleic acid amides, vinyl acetate, vinyl chloride and acrylic acid derivatives and mixtures thereof, for example styrene/butadiene, styrene/acrylonitrile, styrene/ethylene (interpolymers), styrene/alkyl methacrylate, styrene/butadiene/alkyl acrylate and methacrylate, styrene/maleic anhydride, styrene/acrylonitrile/methyl acrylate; high-impact-strength mixtures consisting of styrene copolymers and another polymer, for example a polyacrylate, a diene polymer or an ethylene/propylene/diene terpolymer; and also block copolymers of styrene, for example styrene/butadiene/styrene, styrene/isoprene/styrene, styrene/ethylene-butyleneistyrene or styrene/ethylene-propylene/styrene.
6b. Hydrogenated aromatic polymers prepared by hydrogenation of the polymers mentioned under 6.), especially polycyclohexylethylene (PCHE), often also referred to as polyvinylcyclohexane (PVCH), which is prepared by hydrogenation of atactic polystyrene.
6c. Hydrogenated aromatic polymers prepared by hydrogenation of the polymers mentioned under 6a.).
   Homopolymers and copolymers can have a syndiotactic, isotactic, hemi-isotactic or atactic stereo structure; preference is given to atactic polymers. Also included are stereoblock polymers.
7. Graft copolymers of vinyl-aromatic monomers, for example styrene on polybutadiene, styrene on polybutadiene/styrene or polybutadiene/acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleic acid imide on polybutadiene; styrene and maleic acid imide on polybutadiene, styrene and alkyl acrylates or alkyl methacrylates on polybutadiene, styrene and acrylonitrile on ethylene/propylene/diene terpolymers, styrene and acrylonitrile on polyalkyl acrylates or polyalkyl methacrylates, styrene and acrylonitrile on acrylate/butadiene copolymers, and mixtures thereof with the copolymers mentioned under 6), such as those known, for example, as so-called ABS, MBS, ASA or AES polymers.
8. Halogen-containing polymers, for example polychloroprene, chlorinated rubber, chlorinated and brominated copolymer of isobutylene/isoprene (halobutyl rubber), chlorinated or chlorosulfonated polyethylene, copolymers of ethylene and chlorinated ethylene, epichlorohydrin homo- and co-polymers, especially polymers of halogen-containing vinyl compounds, for example polyvinyl chloride, polyvinylidene chloride, polyvinyl fluoride, polyvinylidene fluoride; and copolymers thereof, such as vinyl chloride/vinylidene chloride, vinyl chloride/vinyl acetate or vinylidene chloride/vinyl acetate.
9. Polymers derived from α,β-unsaturated acids and derivatives thereof, such as polyacrylates and polymethacrylates, or polymethyl methacrylates, polyacrylamides and polyacrylonitriles impact-resistant-modified with butyl acrylate.
10. Copolymers of the monomers mentioned under 9) with one another or with other unsaturated monomers, for example acrylonitrile/butadiene copolymers, acrylonitrile/alkyl acrylate copolymers, acrylonitrile/alkoxyalkyl acrylate copolymers, acrylonitrile/vinyl halide copolymers or acrylonitrile/alkyl methacrylate/butadiene terpolymers.
11. Polymers derived from unsaturated alcohols and amines or their acyl derivatives or acetals, such as polyvinyl alcohol, polyvinyl acetate, stearate, benzoate or maleate, polyvinylbutyral, polyallyl phthalate, polyallylmelamine; and the copolymers thereof with olefins mentioned in Point 1.
12. Homo- and co-polymers of cyclic ethers, such as polyalkylene glycols, polyethylene oxide, polypropylene oxide or copolymers thereof with bisglycidyl ethers.
13. Polyacetals, such as polyoxymethylene, and also those polyoxymethylenes which contain comonomers, for example ethylene oxide; polyacetals modified with thermoplastic polyurethanes, acrylates or MBS.
14. Polyphenylene oxides and sulfides and mixtures thereof with styrene polymers or polyamides.
15. Polyamides and copolyamides derived from diamines and dicarboxylic acids and/or from aminocarboxylic acids or the corresponding lactams, such as polyamide 4, polyamide 6, polyamide 6/6, 6/10, 6/9, 6/12, 4/6, 12/12, polyamide 11, polyamide 12, aromatic polyamides derived from m-xylene, diamine and adipic acid; polyamide 6/l (polyhexamethylene isophthalimide, MXD (m-xylylenediamine); polyamides prepared from hexamethylenediamine and iso- and/or tere-phthalic acid and optionally an elastomer as modifier, for example poly-2,4,4-trimethylhexamethylene terephthalamide or poly-m-phenylene isophthalamide. Block copolymers of the above-mentioned polyamides with polyolefins, olefin copolymers, ionomers or chemically bonded or grafted elastomers; or with polyethers, for example with polyethylene glycol, polypropylene glycol or polytetramethylene glycol. Also polyamides or copolyamides modified with EPDM or ABS; and polyamides condensed during processing ("RIM polyamide systems").
   Examples of polyamides and copolyamides that can be used are derived from, *inter alia,* ε-caprolactam, adipic acid, sebacic acid, dodecanoic acid, isophthalic acid, terephthalic acid, hexamethylenediamine, tetramethylenediamine, 2-methyl-pentamethylenediamine, 2,2,4-trimethylhexamethylenediamine, 2,4,4-trimethylhexamethylenediamine, m-xylylenediamine or bis(3-methyl-4-aminocyclohexyl)methane;
   and also semi-aromatic polyamides such as polyamide 66/6l, for example consisting of 70 - 95 % polyamide 6/6 and 5 - 30 % polyamide 6/l; and also tricopolymers in which some of the polyamide 6/6 has been replaced, for example consisting of 60 - 89 % polyamide 6/6, 5 - 30 % polyamide 6/1 and 1 - 10 % of another aliphatic polyamide; the latter may consist of, for example, polyamide 6, polyamide 11, polyamide 12 or polyamide 6/12 units. Such tricopolymers may accordingly be designated polyamide 66/61/6, polyamide 66/61/11, polyamide 66/61/12, polyamide 66/6l/610 or polyamide 66/61/612.
16. Polyureas, polyimides, polyamide imides, polyether imides, polyester imides, polyhydantoins and polybenzimidazoles.
17. Polyesters derived from dicarboxylic acids and dialcohols and/or from hydroxycarboxylic acids or the corresponding lactones, such as polyethylene terephthalate, polypropylene terephthalate, polybutylene terephthalate, poly-1,4-dimethylolcyclohexane terephthalate, polyalkylene naphthalate (PAN) and polyhydroxybenzoates, and also block polyether esters derived from polyethers with hydroxyl terminal groups; and also polyesters modified with polycarbonates or MBS.
18. Polycarbonates and polyester carbonates.
19. Polyketones
20. Polysulfones, polyether sulfones and polyether ketones.
21. Mixtures (polyblends) of the afore-mentioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

The present invention accordingly relates also to the use of the flame retardants according to the invention in imparting flame-resistant properties to synthetic polymers, especially to thermoplastics, and also to a method of imparting flame-resistant properties to synthetic polymers, wherein at least one flame retardant according to the invention is incorporated in the synthetic polymers or is applied to their surface.

The invention relates also to a composition comprising
a) a synthetic polymer and
b) a flame retardant according to the invention, the synthetic polymer preferably being a thermoplastic polymer.

Preference is given to compositions wherein the synthetic polymer is high-impact polystyrene (HIPS), expandable polystyrene (EPS), expanded polystyrene (XPS), polyphenylene ether (PPE), a polyolefin, polyamide, polyester, polycarbonate (PC) or a polymer blend of the type ABS (aaylonitrile-butadiene-styrene) or PC/ABS (polycarbonate/acrylonitrile-butadiene-styrene) or PPE/HIPS (polyphenylene ether/high-impact polystyrene), especially a polyamide, polyester, a PPE/HIPS blend or a polyethylene or polypropylene homo- or copolymer, examples of the latter being ethylene/propylene copolymers (EPR), ethylene/propyleneldiene terpolymers (EPDM) comprising small amounts of diene, and mixtures of polypropylene and polyethylene (LD, MD, LLD, MD).

Special preference is given to polymer compositions according to the invention that comprise a filler or a reinforcing agent, especially glass-fibre-reinforced polymers, e.g. glass-fibre-reinforced polyamide.

Preparation of the compositions according to the invention may be carried out either by adding or applying the flame retardants consisting of components A and B according to the invention or, however, by adding or applying the individual components A and B separately.

Preference is given to the use of components A and B, each independently of the other, in a concentration of from 0.1 to 30 % by weight, for example from 0.2 to 20 % by weight, preferably from 0.2 to 15 % by weight, based on the plastics moulding material.

The compositions according to the invention contain the flame retardant consisting of components A and B in an amount of, for example, from 0.1 to 50 % by weight, preferably from 0.3 to 40 % by weight, especially from 0.3 to 30 % by weight or from 0.8 to 30 % by weight, based on the composition. The total amount of flame retardant depends, *inter alia,* on the polymer used, on the flame retardant combination employed and on the flame retardant classification to be achieved.

The flame-retarding components A and B may be incorporated in the polymers, for example by pre-mixing all the constituents in the form of powder and/or granules in a mixer and then homogenising in the polymer melt in a compounding unit (*inter alia,* a twin-screw extruder). The melt is usually drawn off in the form of an extruded strand, cooled and granulated. Components A and B may also be directly introduced separately into the compounding unit by means of a feed unit.

It is likewise possible for the flame-retarding components A and B to be admixed with finished polymer granules or powder and the mixture directly processed into moulded articles using an injection-moulding machine. In the case of polyesters, for example, the flame-retarding additives A and B may also already be added to the polyester material during polycondensation.

The polymer compositions according to the invention may be in the form of moulding materials, films, fibres and other moulded articles or in the form of surface-coating compositions or may be further processed into such forms.

It can be advantageous for the flame retardants according to the invention to be processed into a stable product form before addition to the polymer(s) in question to produce the polymer compositions according to the invention. This may serve the purpose, on the one hand, of better meterability and better industrial hygiene (e.g. freedom from dust) and, on the other hand, of a stable form for marketing. Preferred product forms of the latter kind are, for example, granules and agglomerates. The former can be obtained, for example, by extruding mixtures from an extruder and granulating the extruded strand. Alternatively, the mixture can be heated to above the melting point and the melt solidified by conventional methods (e.g. dripping onto a cooling belt or into a liquid such as water or spraying into air). In such methods the flame retardant mixture according to the invention may be processed as such or after addition of a carrier or of another adjuvant, for example a wax, plasticiser etc.. Examples of the methods mentioned can be found in, for example, EP-A-392 392 and EP-A-565 184.

To produce agglomerates, for example, an organic adjuvant, for example a polyvinyl alcohol, polyvinylpyrrolidone or polyvinylcaprolactam, is added to a mixture of the flame retardant according to the invention and then spray-dried. By that means, a free-flowing, dust-free agglomerate is obtained. It can be obtained, for example, analogously to the method described in WO-A-03/035736.

The flame-resistant polymer compositions are suitable, *inter alia,* for the production of moulded articles, films, threads and fibres, for example by injection-moulding, extrusion or compression-moulding.

In addition to the flame-retarding combination of A and B according to the invention, further customary components, for example fillers and reinforcing agents such as glass fibres, glass beads or minerals such as chalk, may be added to the polymer compositions. In addition, other additives such as antioxidants, light stabilisers, lubricants, colorants, nucleating agents or antistatics may be included.

Examples of further additives optionally present in the compositions according to the invention are:
1. Antioxidants
   1.1. Alkylated monophenols, for example 2,6-di-tert-butyl-4-methylphenol, 2-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, linear nonylphenols or nonylphenols branched in the side-chain, e.g. 2,6-dinonyl-4-methylphenol, 2,4-dimethyl-6-(1'-methylundec-1'-yl)-phenol, 2,4-dimethyl-6-(1'-methylheptadec-1'-yl)-phenol, 2,4-dimethyl-6-(1'-methyltridec-1'-yl)-phenol and mixtures thereof.
   1.2. Alkylthiomethylphenols for example 2,4-dioctylthiomethyl-6-tert-butylphenol, 2,4-dioctyl-thiomethyl-6-methylphenol, 2,4-dioctylthiomethyl-6-ethylphenol, 2,6-didodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (Vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl) disulfide.
   1.6. Alkylidene bisphenols, for example 2,2'-methylenebis(64ert-butyl-4-methylphenol), 2,2'-methylenebis(6-tert-butyl-4-ethyl phenol), 2,2'-methylenebis[4-methyl-6-(a-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tertbutylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methylphenyl)-dicyclopentadiene, bis[2-(3'-tert-butyl-2'-hydroxy-5'-methylbenzyl)-6-tert-buty1-4-methylphenyl] terephthalate, 1,1-bis(3,5-dimethyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecylmercaptobutane, 1,1,5,5-tetra(5 tert-butyl-4-hydroxy-2-methylphenyl)pentane.
   1.7. O-, N- and S-benzyl compounds, for example 3,5,3',5'-tetra-tert-butyl-4,4'-dihydroxy-dibenzyl ether, octadecyl-4-hydroxy-3,5-dimethylbenzyl mercaptoacetate, tridecyl-4-hydroxy-3,5-di-tert-butylbenzyl mercaptoacetate, tris(3,5-di-tert-butyl-4-hydroxybenzyl)amine, bis(4-tert-butyl-3-hydroxy-2,6-dimethylbenzyl) dithioterephthalate, bis(3,5-di-tert-butyl-4-hydroxybenzyl) sulfide, isooctyl-3,5-di-tert-butyl-4-hydroxybenzyl mercaptoacetate.
   1.8. Hydroxybenzylated malonates, for example dioctadecyl 2,2-bis(3,5-di-tert-butyl-2-hydroxybenzyl)malonate, dioctadecyl 2-(3-tert-butyl-4-hydroxy-5-methylbenzyl)malonate, didodecylmercaptoethyl 2,2-bis(3,5-di-tert-butyl-4-hydroxybenzyl)malonate, di[4-(1,1,3,3-tetramethylbutyl)phenyl] 2,2-bis(3,5-di-tert-butyl-4-hydroxybenzyl)malonate.
   1.9. Hydroxybenzyl aromatic compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bisoctylmercapto-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)hexahydro-1,3,5-triazine, 1,3,5-tris(3,5-dicydohexyl-4-hydmxy-benzyl) isocyanurate.
   1.11. Benzylphosphonates, for example dimethyl 2,5-di-tert-butyl-4-hydroxybenzylphosphonate, diethyl 3,5-di-tert-butyl-4-hydroxybenzylphosphonate, dioctadecyl 3,5-di-tert-butyl-4-hydroxybenzylphosphonate, dioctadecyl 5-tert-butyl-4-hydroxy-3-methylbenzyl-phosphonate, calcium salt of 3,5-di-tert-butyl-4.-hydroxybenzyl-phosphonic acid monoethyl ester.
   1.12. Acylaminophenols for example 4-hydroxylauric acid anilide, 4-hydroxystearic acid anilide, N-(3,5-di-tert-butyl-4-hydroxyphenyl)carbamic acid octyl ester.
   1.13. Esters of β-(3,5-di-tert-butyl-4-hydroxyphenyl)propionic acid with mono- or poly-hydric alcohols, for example with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalic acid diamide, 3-thiaundecanol, 3-thiapentadecanol, trimethyl-hexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)prooionic acid with mono- or poly-hydric alcohols, for example with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalic acid diamide, 3-thiaundecanol, 3-thiapentadecanol, trimethyl-hexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]undecane.
   1.15. Esters of β-(3,5-dicyclohexyl-4-hydroxyphenyl)propionic acid with mono- or poly-hydric alcohols, for example with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalic acid diamide, 3-thiaundecanol, 3-thiapentadecanol, trimethylhexane-diol, trimethylolpropane, 4-hydroxymethyl-1-phospha-2,6,7-trioxabicyclo[2.2.2]octane.
   1.16. Esters of 3,5-di-tert-butyl-4-hydroxyphenylacetic acid with mono- or poly-hydric alcohols, for example with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalic acid diamide, 3-thiaundecanol, 3-thiapentadecanol, trimethyl-hexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid, for example N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]-propionyloxy)ethyl]-oxamide (Naugard^{®}XL-1 from Uniroyal).
   1.18. Ascorbic acid (Vitamin C).
   1.19. Amine-type antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-di(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfonamido)-diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyl-diphenylamine, 4-n-butylaminophenol, 4-butyrylaminophenol, 4-nonanoylaminophenol, 4-dodecanoylaminophenol, 4-octadecanoylaminophenol, di(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-di[(2-methyl-phenyl)amino]ethane, 1,2-di(phenylamino)propane, (o-tolyl)-biguanide, di[4-(1',3'-dimethylbutyl)phenyl]amine, tert-octylated N-phenyl-1-naphthylamine, mixture of mono- and di-alkylated tert-butyl-/tert-octyl-diphenylamines, mixture of mono- and di-alkylated nonyl-diphenylamines, mixture of mono- and di-alkylated dodecyldiphenylamines, mixture of mono-and di-alkylated isopropyl-/isohexyl-diphenylamines, mixtures of mono- and di-alkylated tert-butyldiphenylamines, 2,3-dihydro-3,3-dimethyl-4H-1,4-b.enzothiazine, phenothiazine, mixture of mono- and di-alkylated tert-butyl-/tert-octyl-phenothiazines, mixture of mono- and di-alkylated tert-octylphenothiazines, N-allylphenothiazine, N,N,N',N'-tetraphenyl-1,4-diaminobut-2-ene, N,N-bis(2,2,6,6-tetramethylpiperid-4-yl)-hexamethylenediamine, bis(2,2,6,6-tetramethylpipeeid-4-yl) sebacate, 2,2,6,6-tetramethylpiperidin-4-one, 2,2,6,6-tetramethylpiperidin-4-ol.
2. UV absorbers and light stabilisers
   2.1. 2-(2'-Hydroxyphenyl)-benzotriazoles, for example 2-(2'-hydroxy-5'-methylphenyl)-benzotriazole, 2-(3',5'-di-tert-butyl-2'-hydroxyphenyl)-benzotriazole, 2-(5'-tert-butyl-2'-hydroxyphenyl)-benzotriazole, 2-(2'-hydroxy-5'-(1,1,3,3-tetramethylbutyl)-phenyl)-benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)-benzotriazole, 2-(2'-hydroxy-4'-octyloxyphenyl)-benzotriazole, 2-(3',5'-di-tert-amyl-2'-hydroxyphenyl)-benzotriazole, 2-(3',5'-bis(α,α-dimethylbenzyl)-2'-hydroxyphenyl)-benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)-benzotriazole, 2-(3'-tert-butyl-2'-hydroxy-5'-(2-octyloxycarbonylethyl)phenylfbenzotriazole, 2-(3'-tert-butyl-5'-[2-(2-ethylhexyl-oxy)carbonylethyl]-2'-hydroxyphenyl)-benzotriazole, 2-(3'-dodecyl-2'-hydroxy-5'-methylphenyl)-benzotriazole, 2-(3'-tert-butyl-2'-hydroxy-5'-(2-isooctyloxycarbonylethyl)-phenyl-benzotriazole, 2,2'-methylenebis[4-(1,1,3,3-tetramethylbutyl)-6-benzotriazol-2-yl-phenol]; transesterification product of 2-[3'-tert-butyl-5'-(2-methoxycarbonylethyl)-2'-hydroxyphenyl]-benzotriazole with polyethylene glycol 300;
      [R-CH₂CH₂COO-CH₂CH₂]₂ wherein R = 3'-tert-butyl-4'-hydroxy-5'-2H-benzotriazol-2-yl-phenyl; 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]-benzotriazole.
   2.2. 2-Hydroxybenzophenones, for example the 4-hydroxy, 4-methoxy, 4-octyloxy, 4-decyl-oxy, 4-dodecyloxy, 4-benzyloxy, 4,2',4'-trihydroxy or 2'-hydroxy-4,4'-dimethoxy derivative.
   2.3. Esters of unsubstituted or substituted benzoic acids, for example 4-tert-butyl-phenyl salicylate, phenyl salicylate, octylphenyl salicylate, dibenzoylresorcinol, bis(4-tert-butylbenzoyl)resorcinol, benzoylresorcinol, 3,5-di-tert-butyl-4-hydroxybenzoic acid 2,4-di-tert-butylphenyl ester, 3,5-di-tert-butyl-4-hydroxybenzoic acid hexadecyl ester, 3,5-di-tert-butyl-4-hydroxybenzoic acid octadecyl ester, 3,5-di-tert-butyl-4-hydroxybenzoic acid 2-methyl-4,6-di-tert-butylphenyl ester.
   2.4. Acrylates, for example α-cyano-β,β-diphenylacrylic acid ethyl ester or isooctyl ester, α-methoxycarbonylcinnamic acid methyl ester, α-cyano-β-methyl-p-methoxycinnamic acid methyl ester or butyl ester, α-methoxycarbonyl-p-methoxycinnamic acid methyl ester, N-(β-methoxycarbonyl-β-cyanovinyl)-2-methyl-indoline.
   2.5. Nickel compounds for example nickel complexes of 2,2'-thio-bis[4-(1,1,3,3-tetramethylbutyl)phenol], such as the 1:1 or 1:2 complex, optionally with additional ligands, such as n-butylamine, triethanolamine or N-cyclohexyldiethanolamine, nickel dibutyl dithiocarbamate, nickel salts of 4-hydroxy-3,5-di-tert-butylbenzylphosphonic acid monoalkyl esters, such as of the methyl or ethyl ester, nickel complexes of ketoximes, such as of 2-hydroxy-4-methylphenylundecyl ketoxime, nickel complexes of 1-phenyl-4-lauroyl-5-hydroxypyrazole, optionally with additional ligands.
   2.6. Sterically hindered amines, for example bis(2,2,6,6-tetramethylpiperid-4-yl) sebacate, bis(2,2,6,6-tetramethylpiperid-4-yl) succinate, bis(1,2,2,6,6-pentamethylpiperid-4-yl) sebacate, bis(1-octyloxy-2,2,6,6-tetramethylpiperid-4-yl) sebacate, n-butyl-3,5-di-tert-butyl-4-hydroxybenzylmalonic acid bis(1,2,2,6,6-pentamethylpiperidyl) ester, condensation product of 1-hydroxyethyl-2,2,6,6-tetramethyl-4-hydroxypiperidine and succinic acid, linear or cyclic condensation products of N,N'-bis(2,2,6,6-tetramethyl-4-piperidyl)hexamethylenediamine and 4-tert-octylamino-2,6-dichloro-1,3,5-s-triazine, tris(2,2,6,6-tetramethyl-4-piperidyl) nitrilotriacetate, tetrakis(2,2,6,6-tetramethyl-4-piperidyl)-1,2,3,4-butanetetraoate, 1,1'-(1,2-ethanediyl)bis(3,3,5,5-tetramethylpiperazinone), 4-benzoyl-2,2,6,6-tetramethylpiperidine, 4-stearyl-oxy-2,2,6,6-tetramethylpiperidine, bis(1,2,2,6,6-pentamethylpiperidyl)-2-n-butyl-2-(2-hydroxy-3,5-di-tert-butylbenzyl) malonate, 3-n-octyl-7,7,9,9-tetramethyl-1,3,8-triazaspiro[4.5]decane-2,4-dione, bis(1-octyloxy-2,2,6,6-tetramethylpiperidyl) sebacate, bis(1-octyloxy-2,2,6,6-tetramethylpiperidyl) succinate, linear or cyclic condensation products of N,N'-bis(2,2,6,6-tetramethyl-4-piperidyl)hexamethylenediamine and 4-morpholino-2,6-dichloro-1,3,5-triazine, condensation product of 2-chloro-4,6-di(4-n-butylamino-2,2,6,6-tetramethylpiperidyl)-1,3,5-triazine and 1,2-bis(3-aminopropylamino)ethane, condensation product of 2-chloro-4,6-di(4-n-butylamino-1,2,2,6,6-pentamethylpiperidyl)-1,3,5-triazine and 1,2-bis(3-aminopropyl-amino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, mixture of 4-hexadecyloxy- and 4-stearyloxy-2,2,6,6-tetramethylpiperidine, condensation product of N,N'-bis(2,2,6,6-tetramethyl-4-piperidyl)hexamethylenediamine and 4-cyclohexylamino-2,6-dichloro-1,3,5-triazine, condensation product of 1,2-bis(3-aminopropylamino)ethane and 2,4,6-trichloro-1,3,5-triazine and 4-butylamino-2,2,6,6-tetramethylpiperidine (CAS Reg. No. [136504-96-6]); condensation product of 1,6-diaminohexane and 2,4,6-trichloro-1,3,5-triazine and also N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4.5]decane, reaction product of 7,7,9,9-tetramethyl-2-cycloundecyl-1-oxa-3,8-diaza-4-oxospiro-[4.5]decane and epichlorohydrin, 1,1-bis(1,2,2,6,6-pentamethyl-4-piperidyloxycarbonylr2-(4-methoxyphenyl)ethene, N,N'-bis-formyl-N,N'-bis(2,2,6,6-tetramethyl-4-piperidyl)hexamethylenediamine, diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic anhydride α-olefin copolymer and 2,2,6,6-tetramethyl-4-aminopiperidine or 1,2,2,6,6-pentamethyl-4-aminopiperidine.
   2.7. Oxalic acid diamides for example 4,4'-dioctyloxy oxanilide, 2,2'-diethoxy oxanilide, 2,2'-dioctyloxy-5,5'-di-tert-butyl oxanilide, 2,2'-didodecyloxy-5,5'-di-tert-butyl oxanilide, 2-ethoxy-2'-ethyl oxanilide, N,N'-bis(3-dimethylaminopropyl) oxalamide, 2-ethoxy-5-tert-butyl-2'-ethyl oxanilide and a mixture thereof with 2-ethoxy-2'-thyl-5,4'-di-tert-butyl oxanilide, mixtures of o- and p-methoxy- and also of o- and p-ethoxy-di-substituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-prop-yloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropyloxy)phenyl]-4,6-bis(2,4₋dimethylphenyl)-1,3,5-triazine, 2-[2-hydroxy-4-(2-hydroxy-3-octyloxypropyloxy)phenyl]-4,6-bis(2,4-dimethylphenyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris(2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-{2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxalic acid diamide, N-salicylal-N'-salicyloylhydrazine, N,N'-bis(salicyloyl)hydrazine, N,N'-bis(3,5-di-tert-butyl-4-hydroxyphenylpropionyl)-hydrazine, 3-salicyloylamino-1,2,4-triazole, bis(benzylidene)oxalic acid dihydrazide, oxanilide, isophthalic acid dihydrazide, sebacic acid bis-phenylhydrazide, N,N'-diacetyladipic acid dihydrazide, N,N'-bis-salicyloyloxalic acid dihydrazide, N,N'-bis-salicyloylthiopropionic acid dihydrazide.
4. Phosphites and phosphonites, for example triphenyl phosphite, diphenylalkyl phosphites, phenyldialkyl phosphites, tris(nonylphenyl)phosphite, trilauryl phosphite, trioctadecyl phosphite, distearyl-pentaerythritol diphosphite, tris(2,4-di-tert-butylphenyl)phosphite, diisodecylpentaerythritol diphosphite, bis(2,4-di-tert-butylphenyl)pentaerythritol diphosphite, bis(2,4-dicumylphenyl)-pentaerythritol diphosphite, bis(2,6-di-tert-butyl-4-methylphenyl)-pentaerythritol diphosphite, bis-isodecyloxy-pentaerythritol diphosphite, bis(2,4-di-tert-butyl-6-methylphenyl)pentaerythritol diphosphite, bis(2,4,6-tri-tert-butylphenyl)pentaerythritol diphosphite, tristearyl sorbitol triphosphite, tetrakis(2,4-di-tert-butylphenyl)-4,4-biphenylene diphosphonite, 6-isooctyloxy-2,4,8,10-tetra-tert-butyl-12H-dibenzo[d,g]-1,3,2-dioxaphospho-cine, bis(2,4-di-tert-butyl-6-methylphenyl) methyl phosphite, bis(2,4-di-tert-butyl-6-methylphenyl) ethylphosphite, 6-fluoro-2,4,8,10-tetra-tert-butyl-12-methyl-dibenzo[d,g]-1,3,2-dioxa-phosphocine, 2,2',2"-nitrilo[triethyl-tris(3,3',5,5'-tetra-tert-butyl-1,1'-biphenyl-2,2'-diyl)-phosphite], 2-ethylhexyl-(3,3',5,5'-tetra-tert-butyl-1,1'-biphenyl-2,2'-diyl) phosphite, 5-butyl-5-ethyl-2-(2,4,6-tri-tert-butylphenoxy)-1,3,2-dioxaphosphirane.
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine from hydrogenated tallow fatty amines.
6. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-octadecyl-alpha-pentadecylnitrone, N-heptadecyl-alpha-heptadecylnitrone, N-octadecyl-alpha-hexadecylnitrone, nitrones derived from N,N-dialkylhydroxylamines prepared from hydrogenated tallow fatty amines.
7. Thiosynergisfic compounds, for example thiodipropionic acid dilauryl ester or thio-dipropionic acid distearyl ester.
8. Peroxide-destroying compounds, for example esters of β-thio-dipropionic acid, for example the lauryl, stearyl, myristyl or tridecyl ester, mercaptobenzimidazole, the zinc salt of 2-mercaptobenzimidazole, zinc dibutyldithiocarbamate, dioctadecyldisulfide, pentaerythritol tetrakis(β-dodecylmercapto)propionate.
9. Polyamide stabilisers, for example copper salts in combination with iodides and/or phosphorus compounds and salts of divalent manganese.
10. Basic co-stabilisers, for example melamine, polyvinylpyrrolidone, dicyandiamide, triallyl cyanurate, urea derivatives, hydrazine derivatives, amines, polyamides, polyurethanes, alkali metal and alkaline earth metal salts of higher fatty acids, for example calcium stearate, zinc stearate, magnesium behenate, magnesium stearate, sodium ricinoleate, potassium palmitate, antimony pyrocatecholate or zinc pyrocatecholate.
11. Nucleating agents for example inorganic substances, e.g. talc, metal oxides, such as titanium dioxide or magnesium oxide, phosphates, carbonates or sulfates of preferably alkaline earth metals; organic compounds, such as mono- or poly-carboxylic acids and their salts, e.g. 4-tert-butylbenzoic acid, adipic acid, diphenylacetic acid, sodium succinate or sodium benzoate; polymeric compounds, for example ionic copolymerisates ("ionomers"). Special preference is given to 1,3:2,4-bis(3',4'-dimethylbenzylidene)sorbitol, 1,3:2,4-di(paramethyldibenzylidene)sorbitol and 1,3:2,4-di(benzylidene)sorbitol.
12. Fillers and reinforcing agents, for example calcium carbonate, silicates, glass fibres, glass beads, talc, kaolin, mica, barium sulfate, metal oxides and hydroxides, carbon black, graphite, wood powders, and powders and fibres of other natural products, synthetic fibres.
13. Other additives, for example plasticisers, lubricants, emulsifiers, pigments, rheology additives, catalysts, flow improvers, optical brighteners, antistatics, blowing agents.
14. Benzofuranones and indolinones, for example as described in U.S. 4,325,863; U.S. 4,338,244; U.S. 5,175,312, U.S. 5,216,052; U.S. 5,252,643; DE-A-4 316 611; DE-A-4 316 622; DE-A-4 316 876; EP-A-0 589 839 or EP-A-0 591 102, or 3-[4-(2-acetoxyethoxy)phenyl]-5,7-di-tert-butyl-benzofuran-2-one, 5,7-di-tert-butyl-3-[4-(2-stearoyl-oxyethoxy)phenyl]benzofuran-2-one, 3,3'-bis[5,7-di-tert-butyl-3-(4-[2-hydroxyethoxy]phenyl)-benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxy-phenyl)-5,7-di-tert-butyl-benzofuran-2-one, 3-(3,4-dimethylphenyl)-5,7-di-tert-butyl-benzofuran-2-one, 3-(2,3-dimethylphenyl)-5,7-di-tert-butyl-benzofuran-2-one.

For example, polymer compositions according to the invention comprise additional additives such as antioxidants, processing stabilisers, light stabilisers, metal deactivators, hydroxylamines, thiosynergistic compounds, copper salts, nucleating agents, fillers, reinforcing agents, pigments or/and antistatics, especially phenolic or amine-type antioxidants, hydroxylamines, phosphites, phosphonites or/and benzofuranones and also, more especially, light stabilisers from the classes of UV absorbers or/and sterically hindered amines.

The flame retardants according to the invention and polymer compositions comprising them may also comprise further flame retardants (component C), for which any flame-retarding active ingredient from the classes known hitherto is, in principle, suitable. Examples are antimony compounds, for example antimony trioxide, antimony pentoxide or sodium antimonate, especially in combination with halogen compounds; alkaline earth metal oxides, for example magnesium oxide or other metal oxides such as zinc oxide, aluminium oxide, argillaceous earth, silica, iron oxide or manganese oxide; metal hydroxides, for example magnesium hydroxide or aluminium hydroxide; nanocomposites; mineral earths such as montmorillonite or kaolin; modified mineral earths, for example comprising primary or quaternary ammonium compounds, melamine or phosphorus-containing compounds; silicon-containing compounds, for example silicates, e.g. calcium silicate, organosilicon compounds (aliphatic or aromatic), for example silicones; titanates or zirconates; metal borates, for example zinc borate (hydrated or non-hydrated); other metal compounds such as calcium sulfate, magnesium carbonate, molybdenum trioxide; further phosphorus compounds, for example phosphates, phosphate esters, phosphonates, phosphinates, phosphines, phosphazenes, phosphine oxides or phosphites, amongst which preference is given to phosphates, phosphinates and phosphonates; sterically hindered alkoxyamine compounds; and organohalogen compounds.

Sterically hindered alkoxyamine compounds correspond, for example, to the formula 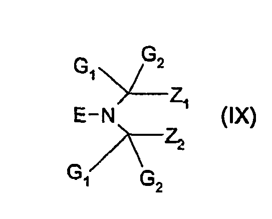 wherein G₁ and G₂ are each independently of the other C₁-C₈alkyl or together are pentamethylene or hexamethylene, each being preferably C₁-C₄alkyl, especially methyl,
Z₁ and Z₂ are each methyl or Z₁ and Z₂ together are a bridging group, especially for completion of a 5- or 6-membered ring, preferably a piperidine ring, it being possible for the resulting N-heterocycle to be unsubstituted or substituted, for example by ester, ether, amide, amino, carboxy or urethane groups,
E is alkoxy, alkenyloxy, cycloalkoxy, aralkoxy, aryloxy or O-T-(OH)_{b} and T is C₁-C₁₈alkylene, C₅-C₁₈cydoalkylene, C₅-C₁₈cycloalkenylene, or C₁-C₄alkylene substituted by phenyl or by phenyl substituted by 1 or 2 C₁-C₄alkyl groups, and
b is 1, 2 or 3, with b not being greater than the number of carbon atoms in T and, when b is 2 or 3, each hydroxyl group being bonded to a different carbon atom.

E is preferably C₁-C₁₈alkoxy, C₅-C₆cycloalkoxy, or C₁-C₁₈alkyl substituted by from 1 to 3 OH groups.

Examples of sterically hindered alkoxyamines of formula IX can be found in US-A-4,983,737, US-A-5,047,489 and US-A-5,077,340, and also GB-A-2 373 507 (especially page 7, line 1 to page 31, line 1; page 48, line 10 to page 52, third line from the bottom) and WO-A-03/050175 (especially page 11, penultimate line to page 37, last line; page 54, line 9 to third last line; pages 61/62, compounds NOR1 to NOR12). The mentioned references are to be considered as part of the present Application.

The organohalogen compounds optionally present in flame retardants according to the invention may belong to a very great variety of chemical classes. Examples thereof are halogenated aromatic compounds, for example halogenated benzenes, biphenyls; phenols, ethers or esters thereof; bisphenols, diphenyl oxides; aromatic carboxylic acids or polyacids, anhydrides, amides or imides thereof; halogenated cycloaliphatic or polycycloaliphatic compounds; and also halogenated aliphatic compounds, for example halogenated paraffins, oligomers and polymers, alkyl phosphates and alkyl isocyanurates. Examples of the mentioned classes of compounds are known from the literature. In that respect, see, for example, US-A-4,579,906 (e.g. column 3, lines 30-41), US-A-5,393,812 and also "Plastics Additives Handbook", Ed. by H. Zweifel, 5th Ed., Hanser Publ., Munich 2001, pages 681-698).

Individual examples of such halogenated organic flame retardant components are: chloroalkyl phosphate esters (Antiblaze^{®} AB-100, Fyrol^{®}FR-2), tris(2-chloroethyl) phosphate, polybrominated diphenyl oxide (DE-60F, Great Lakes Corp.), decabromodiphenyl oxide (DBDPO, Saytex^{®}120E), tris[3-bromo-2,2-bis(bromomethyl)propyl] phosphate (PB 370^{®}, FMC Corp.), tris(2,3-dibromopropyl) phosphate, tris(2,3-dichloropropyl) phosphate, chlorendic acid, tetrachlorophthalic acid, tetrabromophthalic acid, bis(N,N'-hydroxyethyl)-tetrachlorophenylenediamine, poly-β-chloroethyl triphosphonate mixture, bis(2,3-dibromopropyl ether) of bisphenol A (PE68), brominated epoxy resin, ethylene bis(tetrabromophthalimide) (Saytex^{®} BT-93), bis(hexachlorocyclopentadiene)cyclooctane (Dechlorane Plus^{®}), chlorinated paraffins, octabromodiphenyl ether, hexachlorocyclopentadiene derivatives, 1,2-bis(tribromophenoxy)ethane (FF68O), tetrabromo-bisphenol A (Saytex^{®} RB100), ethylene bis(dibromonorbomane-dicarboximide) (Saytex^{®} BN-451), bis(hexachlorocyclopentadiene)-cyclooctane, polytetrafluoroethylene (Teflon^{®} GC), tris(2,3-dibromopropyl) isocyanurate, ethylene bis(tetrabromophthalimide).

Among those, preference is given to organobromine flame retardants.

As examples of phosphorus-containing flame retardants there may be mentioned, for example:
tetraphenylresorcinol diphosphite (Fyroflex^{®} RDP), triphenyl phosphate, trioctyl phosphate, tricresyl phosphate, tetrakis(hydroxymethyl)phosphonium sulfide, diethyl-N,N-bis(2-hydroxyethyl)aminomethyl phosphonate, hydroxyalkyl esters of phosphoric acids, ammonium polyphosphate (APP) or (Hostaflam^{®} AP750), resorcinol diphosphate oligomer (RDP), phosphazene flame retardants and ethylenediamine diphosphate (EDAP).

The flame retardant component C from the class of phosphorus-containing flame retardants is advantageously a salt of melamine, or a condensation product thereof, with a phosphorus-containing acid, namely a monobasic phosphorus-containing acid, e.g. a phosphoric, phosphonic or, preferably, phosphinic acid having in each case only one acid equivalent; more especially, alkylphosphonic acid esters and, preferably, alkylphosphinic acid esters come into consideration. The cationic component is, for example, melamine, melam, melem or a higher condensation product of melamine, preferably melamine or melam. Such salts and their preparation are described, for example, in EP-A-363 321 and WO-A-01/57051.

Especially suitable as component C in flame retardants or flame-retarded polymer compositions according to the invention are salts of organic phosphinic acids or diphosphinic acids, especially salts of formulae X and XI 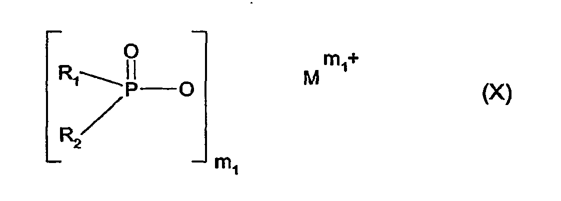 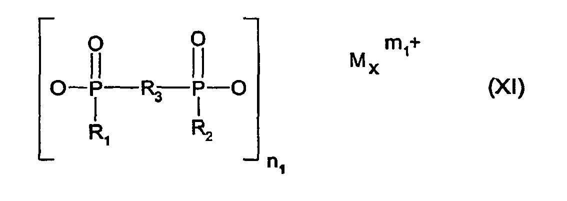 wherein
R₁ and R₂, which are the same or different, are C₁-C₆alkyl, especially C₁-C₄alkyl, or C₆-C₁₀aryl;
R₃ is C₁-C₁₀alkylene, C₆-C₁₀-arylene, -alkylarylene or -arylalkylene;
M is magnesium, calcium, aluminium, zinc, melamine or a condensation product of melamine,
m₁ is 1, 2 or 3;
n₁ is 1 or 3 and
x is 1 or 2.

M is preferably Zn, Al, melamine, melam or melem, especially Zn or Al. Aryl and arylene, alkylarylene and arylalkylene include, *inter alia,* phenyl, naphthyl, tolyl, xylyl, ethylphenyl, mesityl, propylphenyl or tert-butylphenyl and phenylene, naphthylene, methylphenylene, ethylphenylene or tert-butylphenylene, methylnaphthylene, ethylnaphthylene, tert-butyl-naphthylene, phenylmethylene, phenylpropylene and the corresponding tolyl and xylyl analogues.

Special emphasis is accordingly to be given to flame retardants and flame-retarded polymer compositions according to the invention that comprise as further flame retardant active ingredient (component C) at least one such ingredient from the classes of antimony compounds, metal oxides or hydroxides, nanocomposites, mineral earths, modified mineral earths, organic or inorganic silicon compounds, titanates, zirconates, metal borates, phosphorus compounds, sterically hindered alkoxyamine compounds and/or organohalogen compounds, for example those wherein component C is at least one from the classes antimony compounds, sterically hindered alkoxyamine compounds, phosphorus compounds or/and organohalogen compounds. Especially suitable as component C are a phosphate, phosphate ester, phosphonate, phosphinate, phosphine, phosphine oxide, phosphite or/and phosphazene, more especially a metal salt or melamine (including condensation products thereof) salt of a phosphinic acid of formulae X or/and XI.

The Examples that follow illustrate the invention further.

### Examples:

### Polymers:

Polybutylene terephthalate (PBT) from DuPont: Crastin^{®} SK605 NC010
Glass-fibre-filled polyamide 66 (GF-PA66) from Albis (manufactured by BASF): Ultramid^{®} A3EG5.

Moulding grade polypropylene (PP) from Basell: Moplen^{®} HF 500N.

### Additives:

Irgamod^{®} 195 (compound of formula I wherein R = C₂H₅, R' = Ca⁺⁺/2, n = 1,
R¹³ = R¹⁴ = C(CH₃)₃, and R¹⁵ = H).

Melapur^{®} MP (= melamine phosphate)
Melapur^{®} MC (= melamine cyanurate)
Melapur^{®} 200 (= melamine polyphosphate)
NOR 1 (= 1,6-hexanediamine, N,N'-bis(2,2,6,6-tetramethyl-4-piperidinyl)-, polymer with 2,4,6-trichloro-1,3,5-triazine, reaction products with 3-bromo-1-propene, N-butyl-1-butanamine and N-butyl-2,2,6,6-tetramethyl-4-piperidinamine, oxidised, hydrogenated);
Irganox^{®} HP2215 (= 2 parts of Irganox^{®} 1010, 4 parts of Irgafos^{®} 168, 1 part of Irganox^{®} HP 136)
Irganox^{®} B1171 (= 1 part of Irganox^{®} 1098, 1 part of Irgafos^{®} 168)
(Irgafos^{®} 168 = tris(2,4-di-tert-butylphenyl)phosphite; Irganox^{®} 1010 = pentaerythritol
tetrakis(3-(3,5-di-tert-butyl-4-hydroxyphenyl)propionate);
Irganox^{®} HP 136 = reaction product of 3-hydroxy-5,7-di-tert-butyl-furan-2-one with o-xylene;
Irganox^{®} 1098 = N,N'-hexane-1,6-diyl-bis[3-{3,5-di-tert-butyl-4-hydroxyphenylpropionamide)];
Irganox^{®} B225 (= 1 part of Irganox^{®} 1010, 1 part of Irgafos^{®} 168);
calcium stearate.

### Example 1

The components listed in the following Tables are dry-mixed and are dried *in vacuo* for at least 12 hours at 60°C. The mixtures obtained are extruded in a tightly meshing, co-rotating Haake TW 100 twin-screw extruder with conical screws.

Temperature programme: 210 to 260°C; vacuum: 3 mbar; speed of rotation: 60 rev./min.; throughput 30 g/min.; extrusion is carried out through a perforated die by means of strand extrusion. Cooling of the extruded strand is carried out in a water bath and is followed by granulation. The granules are compressed into 2 mm thick plates in a hot plate tool. Test specimens (20 x 120 mm) are cut out of the plates for the flame retardation test.

### Comparison Examples:

| **Test no.** | **Polymer** | **Additives*** |
|---|---|---|
| CE-1 | PBT | 15 % Melapur^{®} 200 |
| | | 0.25 % Irganox^{®} HP2215 |
| CE-2 | PBT | 10 % Irgamod^{®} 195 |
| | | 0.25 % Irganox^{®} HP2215 |
| CE-3 | GF-PA66 | 15 % Melapur^{®} MC |
| | | 0.3 % Irganox^{®} B1171 |
| CE-4 | GF-PA66 | 10 % Irgamod^{®} 195 |
| | | 0.3 % Irganox^{®} B1171 |

| | | |
|---|---|---|
| *The percentages denote percent by weight, based on the total composition. | | |

### Examples according to the invention:

| **Test no.** | **Polymer** | **Additives*** |
|---|---|---|
| E-1 | PBT | 15 % Melapur^{®} 200 |
| | | 10 % Irgamod^{®} 195 |
| | | 0.25 % Irganox^{®} HP2215 |
| E-2 | PBT | 15 % Melapur^{®} MP |
| | | 10 % Irgamod^{®} 195 |
| | | 0.25 % Irganox^{®} HP2215 |
| E-3 | GF-PA66 | 15 % Melapu^{®} MC |
| | | 10 % Irgamod^{®} 195 |
| | | 0.3 % Irganox^{®} B1171 |
| E-4 | GF-PA66 | 15 % Melapur^{®} MP |
| | | 10 % Irgamod^{®} 195 |
| | | 0.3 % Irganox^{®} B1171 |

| | | |
|---|---|---|
| *The percentages denote percent by weight, based on the total composition. | | |

The test specimens are ignited. It is found that the test specimens comprising the compositions according to the invention (in contrast to the Comparison Examples) self-extinguish.

### Example 2

Polypropylene (Moplen^{®} HF 500N) is dry-mixed with the additives indicated in the Table hereinbelow. The polypropylene comprises, as basic stabiliser, 0.1 % by weight calcium stearate and 0.2 % by weight Irgano^{®} B225. The mixture is extruded in a twin-screw extruder (ZSK 25, Werner & Pfleiderer) at a maximum temperature of 230°C (heating zones 1-6) and at a throughput of 4 kg/hour at 100 revolutions per minute, and the extruded strands are granulated after cooling in a water bath.

The granules are compressed into 200 µm thick films in a hot press (Fontijne TP 200) at 230°C and under a pressure of 50 kN. The flame retardant action of the films is determined in accordance with DIN 4102, Part 1, Classification 32, after conditioning for 48 hours at 25°C and 50 % relative humidity.

### Results of the DIN 4102 test, edge ignition (film size 190 x 90 mm).

| **Formulation** | **Average damaged length (mm)** | **Total burning time (sec.)** | **Classification** |
|---|---|---|---|
| Blank | 190 | 42 | B3 |
| 0.25 % NOR 1 + 0.25 % Irgamod 195 + 0.5 % Melapur MC | 57 | 13 | B2 |

From the above results it can be seen that, when used in very low concentrations, the formulations according to the invention provide polypropylene with flame retardant and self-extinguishing properties.

## Claims

1. A flame retardant comprising
A. at least one organic phosphonate of formula I 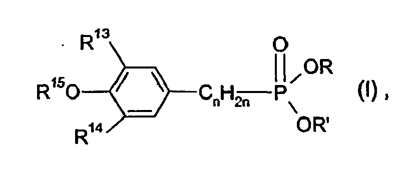 wherein R is hydrogen, C₁-C₂₀alkyl, unsubstituted or C₁-C₄alkyl-substituted phenyl or naphthyl, R' is hydrogen, C₁-C₂₀alkyl, unsubstituted or C₁-C₄alkyl-substituted phenyl or naphthyl or M₁^{r+}/r, n is an integer from 0 to 6, M₁^{r+} is an r-valent metal ion or the ammonium ion, r is an integer from 1 to 4,
R¹³ is isopropyl, isobutyl, tert-butyl, cyclohexyl or is cycloalkyl substituted by from 1 to 3 C₁-C₄alkyl groups,
R¹⁴ is hydrogen, C₁-C₄alkyl, cycloalkyl or is cyclohexyl substituted by from 1 to 3 C₁-C₄alkyl groups, and
R¹⁵ is hydrogen, C₁-C₁₈alkyl, trimethylsilyl, benzyl, phenyl or sulfonyl; and
B. at least one flame retardant component based on a nitrogen compound.

2. A flame retardant according to claim 1, wherein R' is C₂-C₄alkyl or Na⁺, K⁺, Mg⁺⁺/2, Ca⁺⁺/2, Ba⁺⁺/2, Zn⁺⁺/2 or Al⁺⁺⁺/3.

3. A flame retardant according to claim 1, wherein R¹³ is tert-butyl, R¹⁴ is hydrogen or C₁-C₄alkyl, and R¹⁵ is hydrogen.

4. A flame retardant according to claim 1, wherein component B is at least one nitrogen-containing flame retardant component of formulae II to VIIIa 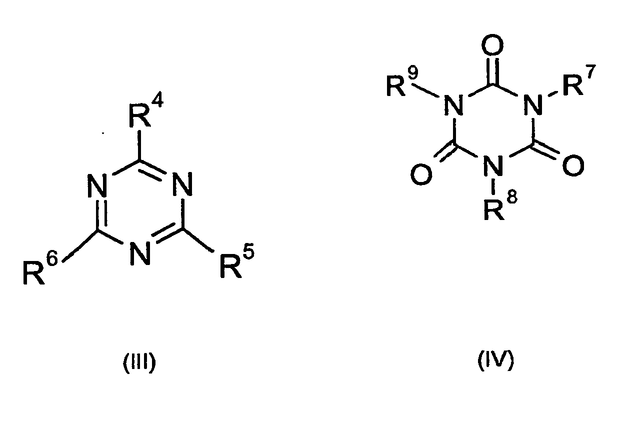 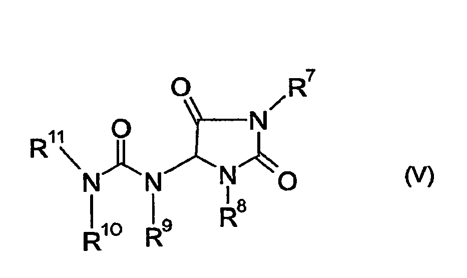 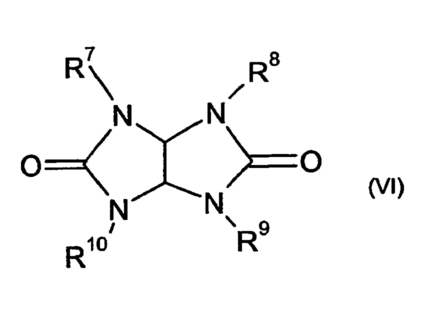 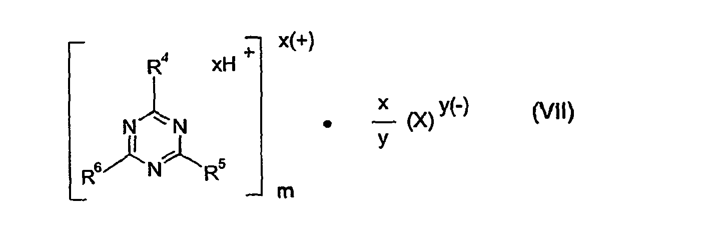 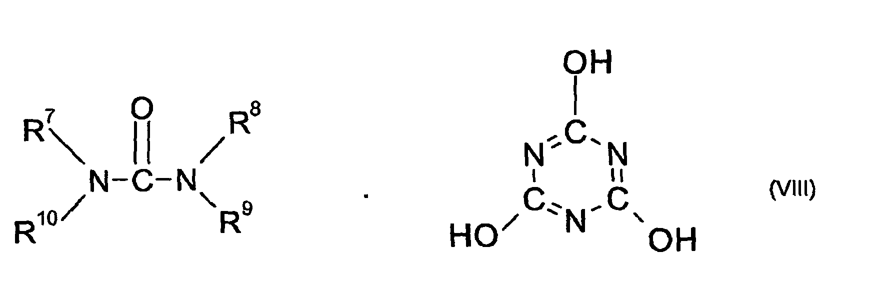 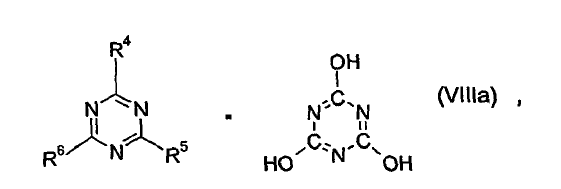 wherein
R⁴ to R⁶ are each independently of the others hydrogen, C₁-C₈alkyl, C₅-C₆cycloalkyl or C₁-C₄alkyl-C₅-C₆cycloalkyl, each unsubstituted or substituted by a hydroxy or C₁-C₄-hydroxyalkyl group; C₂-C₈alkenyl, C₁-C₈-alkoxy, -acyl, -acyloxy, C₆-C₁₂aryl, -O-R² or -N(R²)R³, and R² and R³ are hydrogen, C₁-C₄alkyl, C₅-C₆cycloalkyl, C₂-C₈alkenyl, C₁-C₄hydroxyalkyl or C₆-C₁₂aryl, with the proviso that R⁴ to R⁶ are not simultaneously hydrogen and also, in formula III, not simultaneously -NH₂, and in formula VII at least one group is present which is capable of adding a proton,
R⁷ to R¹¹ indicate the same groups as R⁴ to R⁶ with the exception of the substituent -N(R²)R³, X is the anion of a protonic acid, x is the number of protons transferred from the latter to the triazine compound and y is the number of protons abstracted from the protonic acid;
or ammonium polyphosphate, a melamine ammonium phosphate, melamine ammonium polyphosphate, melamine ammonium pyrophosphate, a condensation product of melamine or/and a reaction product of melamine with phosphoric acid or/and a reaction product of a condensation product of melamine with phosphoric acid or a mixture thereof.

5. A flame retardant according to claim 1, wherein component B is at least one compound of formulae VII or/and VIIIa or/and ammonium polyphosphate, a melamine ammonium polyphosphate, melamine ammonium pyrophosphate, a condensation product of melamine or/and a reaction product of melamine with phosphoric acid or/and a reaction product of a condensation product of melamine with phosphoric acid or/and a mixture thereof.

6. A flame retardant according to claim 1, wherein component B is benzoguanamine, tris(hydroxyethyl) isocyanurate, allantoin, glycoluril, melamine cyanurate, melamine phosphate, dimelamine phosphate, melamine pyrophosphate, urea cyanurate, ammonium polyphosphate, melamine polyphosphate, melamine borate, melamine ammonium polyphosphate or melamine ammonium pyrophosphate.

7. A flame retardant according to claim 1, wherein component B is a condensation product of melamine from the series melem, melam, melon and/or a higher condensed compound, or a reaction product of melamine with phosphoric acid and/or a reaction product of a condensation product of melamine with phosphoric acid or a mixture thereof.

8. A flame retardant according to claim 7, wherein component B is dimelamine pyrophosphate, melamine polyphosphate, melem polyphosphate, melam polyphosphate and/or a mixed polysalt of that type.

9. A flame retardant according to claim 1, comprising a further flame-retarding component C.

10. A flame retardant according to claim 9, wherein component C is at least one flame-retarding active ingredient from the classes of antimony compounds, metal oxides or hydroxides, nanocomposites, mineral earths, modified mineral earths, organic or inorganic silicon compounds, titanates, zirconates, metal borates, phosphorus compounds, sterically hindered alkoxyamine compounds and/or organohalogen compounds.

11. A flame retardant according to claim 10, wherein component C is at least one flame-retarding active ingredient from the classes of antimony compounds, sterically hindered alkoxyamine compounds, phosphorus compounds or/and organohalogen compounds.

12. A flame retardant according to claim 11, wherein component C is a metal salt of an alkylphosphinic acid ester or a salt of the latter with melamine or with a condensation product of melamine.

13. A flame retardant according to claim 12, wherein component C is at least one phosphinite of formulae X or/and XI, 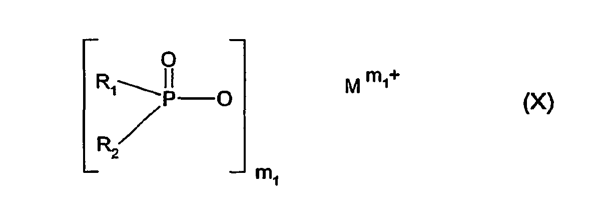 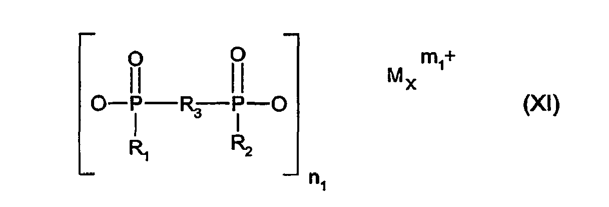 wherein
R₁ and R₂, which are the same or different, are C₁-C₆alkyl, especially C₁-C₄alkyl, or C₆-C₁₀aryl;
R₃ is C₁-C₁₀alkylene, C₆-C₁₀-arylene, -alkylarylene or -arylalkylene;
M is magnesium, calcium, aluminium or zinc, melamine or a condensation product of melamine,
m₁ is 1, 2 or 3;
n₁ is 1 or 3 and
x is 1 or 2.

14. A composition comprising
a) a synthetic, preferably thermoplastic, polymer and
b) at least one flame retardant defined in any one of claims 1 to 13.

15. A composition according to claim 14, wherein the synthetic polymer is high-impact polystyrene (HIPS), expandable polystyrene (EPS), expanded polystyrene (XPS), polyphenylene ether (PPE), a polyolefin, polyamide, polyester, polycarbonate or a polymer blend of the type ABS (acrylonitrile-butadiene-styrene) or PC/ABS (polycarbonate/- acrylonitrile-butadiene-styrene) or PPE/HIPS (polyphenylene ether/high-impact polystyrene).

16. A composition according to claim 14, comprising a filler or a reinforcing agent, especially glass fibres.

17. A composition according to claim 14, comprising an additional additive.

18. A composition according to claim 17, comprising, as additional additive, an antioxidant, a processing stabiliser, a light stabiliser, a metal deactivator, a hydroxylamine, a thiosynergistic compound, a copper salt, a nucleating agent, a filler, a reinforcing agent, a pigment or/and an antistatic.

19. A composition according to claim 18, comprising, as antioxidant or processing stabiliser, a phenolic or amine-type antioxidant, a hydroxylamine, a phosphite, a phosphonite or/and a benzofuranone or/and, as light stabiliser, a UV absorber or/and a light stabiliser from the class of sterically hindered amines.

20. The use of the flame retardant defined in claim 1 for imparting flame-resistant properties to a synthetic polymer.

21. A method of imparting flame-resistant properties to a synthetic polymer, wherein at least one flame retardant defined in claim 1 is incorporated in the synthetic polymer or is applied to the surface thereof.

## Patentansprüche

1. Flammschutzmittel, enthaltend
A. mindestens ein organisches Phosphonat der Formel I 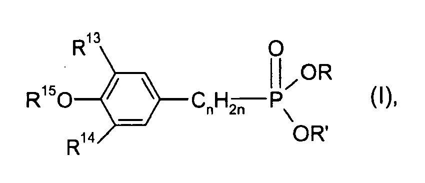 worin R Wasserstoff, C₁-C₂₀-Alkyl, unsubstituiertes oder mit C₁-C₄-Alkyl substituiertes Phenyl oder Naphthyl, R' Wasserstoff, C₁-C₂₀-Alkyl, unsubstituiertes oder mit C₁-C₄-Alkyl substituiertes Phenyl oder Naphthyl oder M₁^{r+}/r, n eine ganze Zahl von 0 bis 6, M₁^{r+} ein r-wertiges Metallion oder das Ammoniumion, r eine ganze Zahl von 1 bis 4,
R¹³ Isopropyl, Isobutyl, tert.-Butyl, Cyclohexyl oder mit 1-3 C₁-C₄-Alkyl substituiertes Cycloalkyl,
R¹⁴ Wasserstoff, C₁-C₄-Alkyl, Cycloalkyl oder mit 1-3 C₁-C₄-Alkyl substituiertes Cyclohexyl und
R¹⁵ Wasserstoff, C₁-C₁₈-Alkyl, Trimethylsilyl, Benzyl, Phenyl oder Sulfonyl ist; und
B. mindestens eine Flammschutzkomponente auf Basis einer Stickstoffverbindung.

2. Flammschutzmittel nach Anspruch 1, worin R' C₂-C₄-Alkyl oder Na⁺, K⁺, Mg⁺⁺/2, Ca⁺⁺/2, Ba⁺⁺/2, Zn⁺⁺/2 oder AI⁺⁺⁺/3 ist.

3. Flammschutzmittel nach Anspruch 1, worin R¹³ tert.-Butyl, R¹⁴ Wasserstoff oder C₁-C₄-Alkyl und R¹⁵ Wasserstoff ist.

4. Flammschutzmittel nach Anspruch 1, worin die Komponente B mindestens eine stickstoffhaltige Flammschutzkomponente der Formeln III bis VIIIa 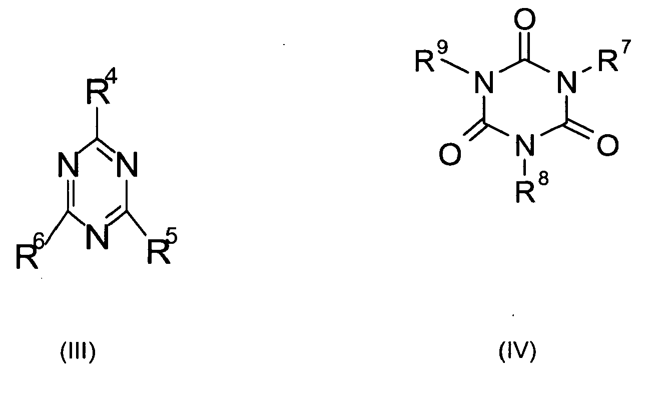 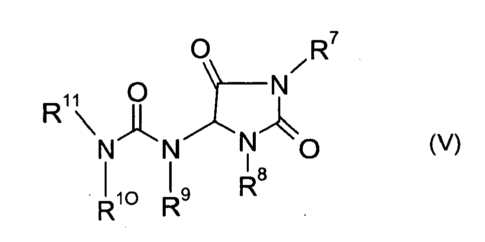 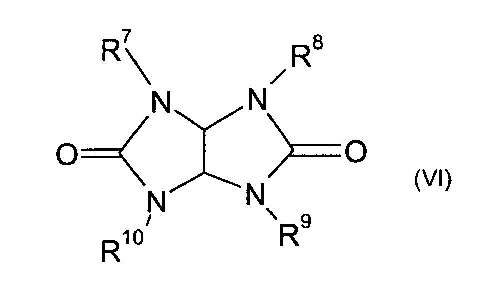 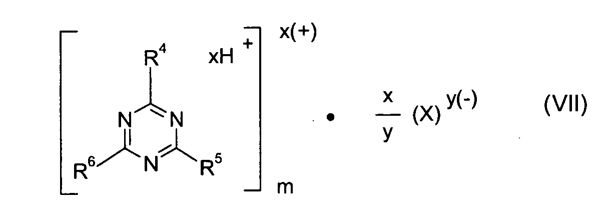 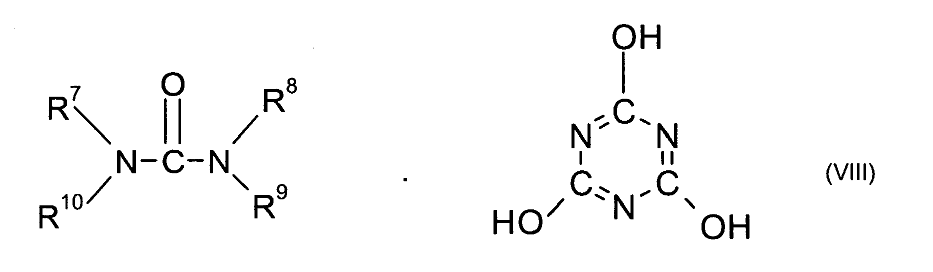 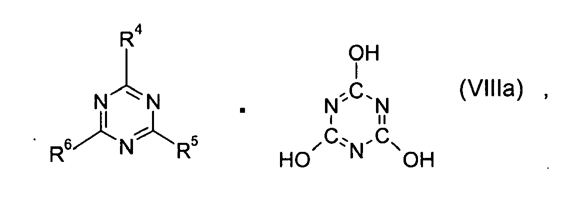 oder Ammoniumpolyphosphat, ein Melaminammoniumphosphat, Melaminammoniumpolyphosphat, Melaminammoniumpyrophosphat, ein Kondensationsprodukt des Melamins oder/und ein Umsetzungsprodukt des Melamins mit Phosphorsäure oder/und ein Umsetzungsprodukt eines Kondensationsproduktes des Melamins mit Phosphorsäure oder Gemische davon ist.

5. Flammschutzmittel nach Anspruch 1, worin die Komponente B mindestens eine Verbindung der Formeln VII oder/und VIIIa oder/und Ammoniumpolyphosphat, ein Melaminammoniumpolyphosphat, Melaminammoniumpyrophosphat, ein Kondensationsprodukt des Melamins oder/und ein Umsetzungsprodukt des Melamins mit Phosphorsäure oder/und ein Umsetzungsprodukt eines Kondensationsproduktes des Melamins mit Phosphorsäure oder/und Gemische davon darstellt.

6. Flammschutzmittel nach Anspruch 1, worin die Komponente B Benzoguanamin, Tris(hydroxyethyl)isocyanurat, Allantoin, Glycoluril, Melamincyanurat, Melaminphosphat, Dimelaminphosphat, Melaminpyrophosphat, Harnstoffcyanurat, Ammoniumpolyphosphat, Melaminpolyphosphat, Melaminborat, Melaminammoniumpolyphosphat oder Melaminammoniumpyrophosphat ist.

7. Flammschutzmittel nach Anspruch 1, worin die Komponente B ein Kondensationsprodukt des Melamins aus der Reihe Melem, Melam, Melon und/oder eine höherkondensierte Verbindung, oder ein Umsetzungsprodukt von Melamin mit Phosphorsäure und/oder ein Umsetzungprodukt von Kondensationsprodukten des Melmins mit Phosphorsäure oder Gemische davon ist.

8. Flammschutzmittel nach Anspruch 7, worin die Komponente B Dimelaminpyrophosphat, Melaminpolyphosphat, Melempolyphosphat, Melampolyphosphat und/oder ein gemischtes Polysalz dieses Typs ist.

9. Flammschutzmittel nach Anspruch 1, das eine weitere Flammschutzkomponente C enthält.

10. Flammschutzmittel nach Anspruch 9, worin die Komponente C mindestens ein Flammschutzwirkstoff aus den Klassen der Antimonverbindungen, Metalloxide oder -hydroxide, Nanocomposites, Mineralerden, modifizierten Mineralerden, organischen oder anorganischen Siliziumverbindungen, Titanate, Zirkonate, Metallborate, Phosphorverbindungen, sterisch gehinderten Alkoxyaminverbindungen und/oder Organohalogenverbindungen ist.

11. Flammschutzmittel nach Anspruch 10, worin die Komponente C mindestens ein Flammschutzwirkstoff aus den Klassen der Antimonverbindungen, sterisch gehinderten Alkoxyaminverbindungen, Phosphorverbindungen oder/und Organohalogenverbindungen ist.

12. Flammschutzmittel nach Anspruch 11, worin die Komponente C ein Metallsalz eines Alkylphosphinsäureesters oder ein Salz des letzteren mit Melamin oder einem Kondensationsprodukt des Melamins ist.

13. Flammschutzmittel nach Anspruch 12, worin die Komponente C mindestens ein Phosphinat der Formel X oder/und XI ist, 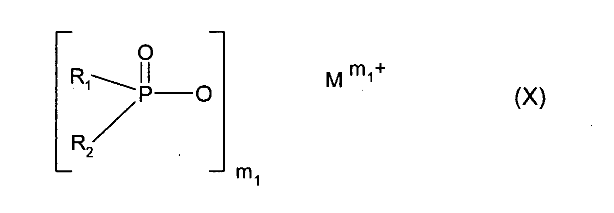 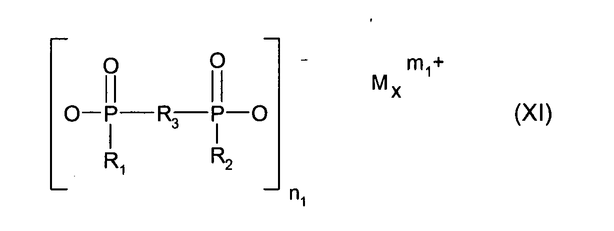 worin
R₁ und R₂ gleich oder verschieden sind und C₁-C₆-Alkyl, insbesondere C₁-C₄-Alkyl, oder C₆-C₁₀-Aryl;
R₃ C₁-C₁₀-Alkylen, C₆-C₁₀-Arylen, -Alkylarylen oder -Arylalkylen;
M Magnesium, Calcium, Aluminium oder Zink, Melamin oder ein Kondensationsprodukt des Melamins,
m₁ 1, 2 oder 3;
n₁ 1 oder 3 und
x 1 oder 2
bedeuten.

14. Zusammensetzung enthaltend
a) ein synthethisches, vorzugsweise thermoplastisches, Polymer und
b) mindestens ein in den Ansprüchen 1 bis 13 definiertes Flammschutzmittel.

15. Zusammensetzung nach Anspruch 14, worin das synthetische Polymer High-Impact Polystyrol (HIPS), expandierbares Polystyrol (EPS), expandiertes Polystyrol (XPS), Polyphenylenether (PPE), ein Polyolefin, Polyamid, Polyester, Polycarbonat oder Polymerblends von Typ ABS (Acrylnitril-Butadien-Styrol) oder PC/ABS (Polycarbonat/Acrylnitil-Butadien-Styrol) oder PPE/HIPS (Polyphenylenether/High-Impact Polystyrol) ist.

16. Zusammensetzung nach Anspruch 14, welche einen Füllstoff oder ein Verstärkungsmittel, insbesondere Glasfasern, enthält.

17. Zusammensetzung nach Anspruch 14, die ein zusätzliches Additiv enthält.

18. Zusammensetzung nach Anspruch 17, worin als zusätzliches Additiv ein Antioxidans, ein Verarbeitungsstabilisator, ein Lichtschutzmittel, ein Metalldesaktivator, ein Hydroxylamin, ein Thiosynergist, ein Kupfersalz, ein Nukleierungsmittel, ein Füllstoff, ein Verstärkungsmittel, ein Pigment oder/und Antistatikum enthalten ist.

19. Zusammensetzung nach Anspruch 18, worin als Antioxidans bzw. Verarbeitungsstabilisator ein phenolisches oder aminisches Antioxidans, ein Hydroxylamin, ein Phosphit, ein Phosphonit oder/und Benzofuranon oder/und als Lichtschutzmittel ein UV-Absorber oder/und ein Lichtschutzmittel aus der Klasse der sterisch gehinderten Amine enthalten ist.

20. Verwendung des in Anspruch 1 definierten Flammschutzmittels zur flammfesten Ausrüstung von einem synthetischen Polymer.

21. Verfahren zum Flammfestausrüsten von synthetischen Polymeren, **dadurch gekennzeichnet, dass** man diesen mindestens ein in Anspruch 1 definiertes Flammschutzmittel einverleibt oder auf deren Oberfläche aufbringt.

## Revendications

1. Ignifugeant comprenant :
A. au moins un phosphonate organique de formule 1 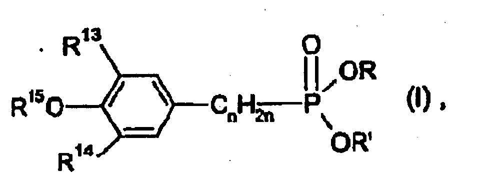 où R est hydrogène, alkyle en C₁-C₂₀, phényle ou naphthyle non substitué ou substitué par alkyle en C₁-C₄, R' est hydrogène, alkyle en C₁-C₂₀, phényle ou naphthyle non substitué ou substitué par alkyle en C₁-C₄ ou M₁^{r+}/r, n est un entier de 0 à 6, M₁^{r+} est un ion métallique r-valent ou l'ion d'ammonium, r est un entier de 1 à 4,
R¹³ est isopropyle, isobutyle, tert-butyle, cyclohexyle ou est cycloalkyle substitué par de 1 à 3 groupes alkyle en C₁-C₄,
R¹⁴ est hydrogène, alkyle en C₁-C₄, cycloalkyle ou est cyclohexyle substitué par 1 à 3 groupes alkyle en C₁-C₄, et
R¹⁵ est hydrogène, alkyle en C₁-C₁₈, triméthylsilyle, benzyle, phényle ou sulfonyle ; et
B. au moins un composant ignifugeant par rapport à un composé d'azote.

2. Ignifugeant selon la revendication 1, dans lequel R' est alkyle en C₂-C₄ ou Na⁺, K⁺, Mg⁺⁺/2, Ca⁺⁺/2, Ba⁺⁺/2, Zn⁺⁺/2 ou Al⁺⁺⁺/3.

3. Ignifugeant selon la revendication 1, dans lequel R¹³ est tert-butyle, R¹⁴ est hydrogène ou alkyle en C₁-C₄, et R¹⁵ est hydrogène.

4. Ignifugeant selon la revendication 1, dans lequel le composant B est au moins un ignifugeant contenant un azote de formules III à VIIIa 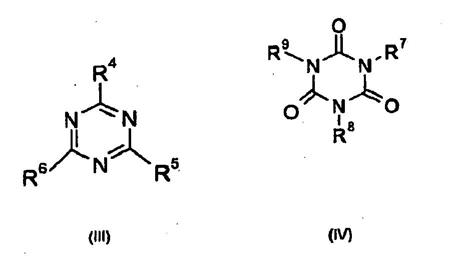 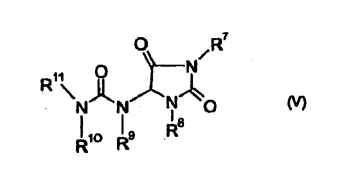 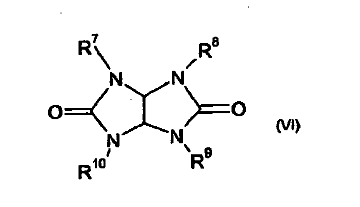 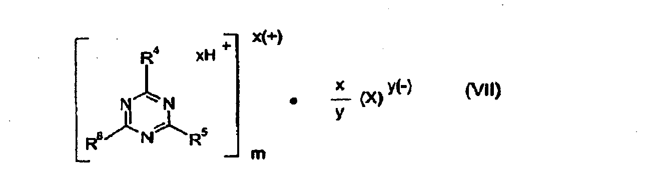 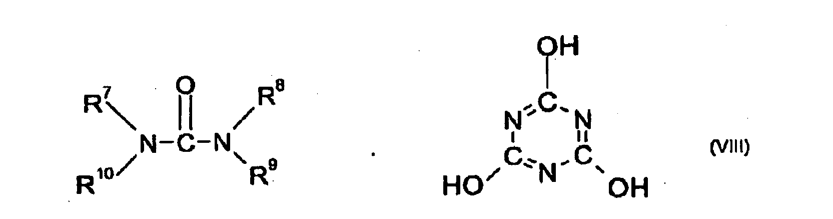 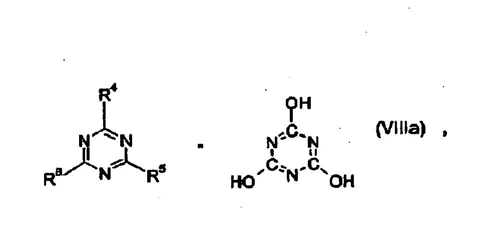 où
R⁴ à R⁶ sont, chacun indépendamment de l'autre, hydrogènes, alkyle en C₁-C₈, cycloalkyle en C₅-C₆ ou alkyle en C₁-C₄-cycloalkyle en C₅-C₆, chacun étant non substitué ou substitué par un hydroxy ou un groupe hydroxyalkyle en C₁-C₄, alcényle en C₂-C₈ ; alcoxy en C₁-C₈, acyle, acyloxy, aryle en C₆-C_{12,} -O-R² ou -N(R²)R³, et R² et R³ sont hydrogène, alkyle en C₁-C₄, cycloalkyle en C₅-C₆, alcényle en C₂-C₈, hydroxyalkyle en C₁-C₄ ou aryle en C₆-C₁₂, à condition que R⁴ à R⁶ ne soient pas simultanément hydrogène et également, dans la formule III, pas simultanément -NH₂, et que dans la formule VII, au moins un groupe qui est capable d'ajouter un proton soit présent,
R⁷ à R¹¹ indiquent les mêmes groupes que R⁴ à R⁶ à l'exception du substituant - N(R²)R³,
X est l'anion d'un acide protonique, x est le nombre de protons transférés du dernier au composé de triazine et y est le nombre de protons soustraits de l'acide protonique ;
ou un polyphosphate d'ammonium, un phosphate d'ammonium de mélamine, un polyphosphate d'ammonium de mélamine, un pyrophosphate d'ammonium de mélamine, un produit de condensation de mélamine et/ou un produit de réaction de mélamine avec de l'acide phosphorique et/ou un produit de réaction d'un produit de condensation de mélamine avec de l'acide phosphorique ou un mélange de ceux-ci.

5. Ignifugeant selon la revendication 1, dans lequel le composant B est au moins un composé de formules VII et/ou VIIIa et/ou un polyphosphate d'ammonium, un polyphosphate d'ammonium de mélamine, un pyrophosphate d'ammonium de mélamine, un produit de condensation de mélamine et/ou un produit de réaction de mélamine avec de l'acide phosphorique et/ou un produit de réaction d'un produit de condensation de mélamine avec de l'acide phosphorique ou/et un mélange de ceux-ci.

6. Ignifugeant selon la revendication 1, dans lequel le composant B est benzoguanamine, tris(hydroxyéthyl) isocyanurate, aliantoïne, glycoluril, cyanurate de mélamine, phosphate de mélamine, phosphate de dimélamine, pyrophosphate de mélamine, cyanurate d'urée, polyphosphate d'ammonium, polyphosphate de mélamine, borate de mélamine, polyphosphate d'ammonium de mélamine ou pyrophosphate d'ammonium de mélamine.

7. Ignifugeant selon la revendication 1, dans lequel le composant B est un produit de condensation de mélamine de la série mélem, mélam, mélon et/ou un produit plus fortement condensé, ou un produit de réaction de mélamine avec de l'acide phosphorique et/ou un produit de réaction d'un produit de condensation de mélamine avec de l'acide phosphorique ou un mélange de ceux-ci.

8. Ignifugeant selon la revendication 7, dans lequel le composant B est pyrophosphate de dimélamine, polyphosphate de mélamine, polyphosphate de mélem, polyphosphate de mélam et/ou un polysel mixte de ce type.

9. Ignifugeant selon la revendication 1, comprenant un autre composant ignifugeant C.

10. Ignifugeant selon la revendication 9, dans lequel le composant C est au moins un ingrédient actif ignifugeant des catégories des composés d'antimoine, oxydes ou hydroxydes métalliques, nanocomposites, terres minérales, terres minérales modifiées, composés de silicium organiques ou inorganiques, titanates, zirconates, borates métalliques, composés de phosphore, composés d'alcoxyamine stériquement contrariés et/ou composés d'organohalogène.

11. Ignifugeant selon la revendication 10, dans lequel le composant C est au moins un ingrédient actif ignifugeant des catégories des composés d'antimoine, composés d'alcoxyamine stériquement contrariés, composés de phosphore et/ou composés d'organohalogène.

12. Ignifugeant selon la revendication 11, dans lequel le composant C est un sel métallique d'un ester d'acide alkylphosphinique ou un sel de ce dernier avec une mélamine ou avec un produit de condensation de mélamine.

13. Ignifugeant selon la revendication 12, dans lequel le composant C est au moins un phosphinite de formules X ou/et XI, 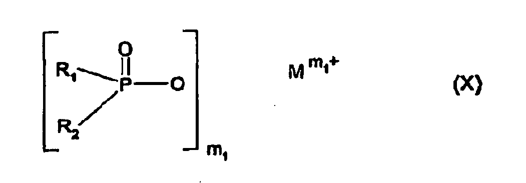 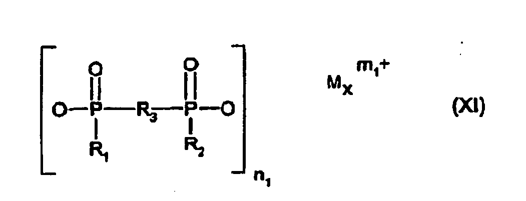 où
R₁ et R₂, qui sont identiques ou différents, sont alkyle en C₁-C₆, en particulier, alkyle en C₁-C₄, ou aryle en C₆-C₁₀;
R₃ est alkylène en C₁-C₁₀, arylène en C₆-C₁₀, -alkylarylène ou -arylalkylène ;
M est magnésium, calcium, aluminium, zinc, mélamine ou un produit de condensation de mélamine,
m₁ est 1, 2 ou 3 ;
n₁ est 1 ou 3 et
x est 1 ou 2.

14. Composition comprenant :
a) un polymère synthétique, de préférence thermoplastique, et
b) au moins un ignifugeant défini selon l'une quelconque des revendications 1 à 13.

15. Composition selon la revendication 14, dans lequel le polymère synthétique est un polystyrène choc (HIPS), un polystyrène expansible (EPS), un polystyrène expansé (XPS), un éther de polyphénylène (PPE), une polyoléfine, un polyamide, un polyester, un polycarbonate (PC) ou un mélange de polymères du type ABS (acrylonitrile-butadiène-styrène) ou PC/ABS (polycarbonate/acrylonitrile-butadiène-styrène) ou PPE/HIPS (polyphénylène éther/polystyrène choc).

16. Composition selon la revendication 14, comprenant une charge ou un agent de renforcement, en particulier, des fibres de verre.

17. Composition selon la revendication 14, comprenant un additif supplémentaire.

18. Composition selon la revendication 17, comprenant, en tant qu'additif supplémentaire, un antioxydant, un stabilisant de traitement, un photostabilisant, un désactivateur métallique, un hydroxylamine, un composés thiosynergique, un sel de cuivre, un agent nucléant, une charge, un agent de renforcement, un pigment, ou/et un antistatique.

19. Composition selon la revendication 18, comprenant, en tant qu'antioxydant ou stabilisant de traitement, un antioxydant de type phénolique ou amine, un hydroxylamine, une phosphite, une phosphonite ou/et un benzofuranone ou/et, en tant que photostabilisant, un absorbeur d'UV ou/et un photostabilisant de la catégorie des amines stériquement contrariées.

20. Utilisation de l'ignifugeant selon la revendication 1 pour fournir des propriétés ignifugeantes à un polymère synthétique.

21. Procédé de fourniture de propriétés ignifugeantes à un polymère synthétique, dans lequel au moins un ignifugeant selon la revendication 1 est incorporé dans le polymère synthétique ou est appliqué à sa surface.
